(19) Europäisches Patentamt
European Patent Office
Office européen des brevets

(11) **EP 3 049 822 B1**

(12) **FASCICULE DE BREVET EUROPEEN**

(45) Date de publication et mention de la délivrance du brevet:
**03.05.2017 Bulletin 2017/18**

(21) Numéro de dépôt: **14783774.4**

(22) Date de dépôt: **25.09.2014**

(51) Int Cl.:
*G01S 7/02* (2006.01)    *H04B 1/7163* (2011.01)

(86) Numéro de dépôt international:
**PCT/EP2014/070450**

(87) Numéro de publication internationale:
**WO 2015/044248 (02.04.2015 Gazette 2015/13)**

(54) **PROCEDE DE DESENTRELACEMENT NON SUPERVISE PAR ENRICHISSEMENT N DIMENSIONS**

VERFAHREN ZUR NICHTÜBERWACHTEN ENTSCHACHTELUNG DURCH N-DIMENSIONALE ANREICHERUNG

METHOD FOR NON-SUPERVISED DEINTERLEAVING BY N-DIMENSIONAL ENRICHMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2013 FR 1302250**

(43) Date de publication de la demande:
**03.08.2016 Bulletin 2016/31**

(73) Titulaire: **THALES**
**92400 Courbevoie (FR)**

(72) Inventeurs:
• **GRANDIN, Jean-François**
  **F-78851 Elancourt Cedex (FR)**
• **LEMOINE, Jean-Marie**
  **F-78851 Elancourt Cedex (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**US-A1- 2013 157 599    US-B1- 7 397 415**

**Description**

La présente invention concerne le domaine des systèmes d'écoute, et plus particulièrement le domaine du traitement de signal exploité par un tel système. La présente invention concerne plus particulièrement un procédé de désentrelacement non supervisé par enrichissement N dimensions.

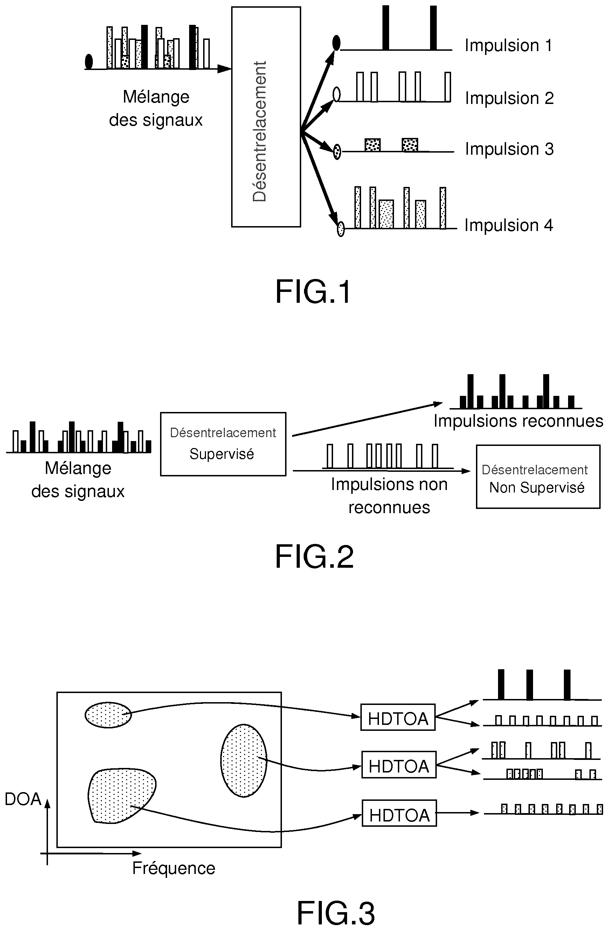

Le traitement considéré est celui du désentrelacement non supervisé des trains d'impulsions émises par des émetteurs électromagnétiques. En référence à la figure 1, lorsqu'un capteur de Mesure de Renseignement Electronique (ou MRE), également connu sous le sigle anglo-saxon ESM ou ELINT pour respectivement Electronic Support Measures et ELectronic INTelligence, intercepte ces trains d'impulsions, il traite toutes les impulsions dont l'intensité est supérieure à son seuil de sensibilité. Les émissions étant simultanément présentes, ces trains d'impulsions sont imbriquées ou « entrelacés ».

Ces situations de mélange ou entrelacement de trains d'impulsions sont d'autant plus fréquentes que la sensibilité des capteurs MRE augmente induisant une augmentation de la densité des impulsions détectées, et que les émissions agiles étalent leurs impulsions sur le spectre, ce qui augmente la probabilité de trouver des impulsions de plusieurs radars à une fréquence donnée.

Pour traiter ces situations l'extracteur doit en tout premier lieu isoler chaque émission d'intérêt pour pouvoir ensuite l'analyser et la caractériser. On parle de « Désentrelacement ».

Une procédé de désentrelacement non supervisé de trains d'impulsions est connu de US 2013/157599.

Les émissions radars interceptées sont grossièrement de trois types :

- TE1 : Cela correspond aux émissions de Haute et Moyenne fréquence de Récurrence (HFR/MFR) présentant des volumes de 30 000 à plus de 100 000 impulsions par seconde par émission. Ces émissions sont de caractéristiques simples, c'est-à-dire de Période de Répétition par Intervalle (PRI) et/ou Fréquence stable par train. Elles sont généralement traitées par des méthodes ad hoc, rapides et robustes.

- TE2 : Cette classe correspond aux émissions Basses Fréquence de Récurrence (BFR) présentant des volumes de 1 000 impulsions par seconde par émission. Ces émissions peuvent présenter des caractéristiques complexes comme par exemple une période de répétition variable (ou « stagger » selon le terme anglo saxon) d'ordre élevé ou une agilité de fréquence impulsion à impulsion.

- TE3 : Ce type d'émission se réfère aux émissions BFR avec agilité impulsion à impulsion de PRI et de fréquence. Ou émissions à faible probabilité d'interception (ou LPI pour Low Probability of intercept selon la terminologie anglo saxonne) à faible nombre d'impulsions et fortement modulées. Diverses méthodes de traitement sont utilisables comme par exemple, la reconnaissance sur les paramètres intra-impulsions et DOA ou le tri par direction d'arrivée (ou DOA pour Direction Of Arrival) et localisation.

Par la suite, on s'intéressera au désentrelacement des émissions de type TE2 et TE3. Les émissions de type TE1 sont traitées séparément par des algorithmes rapides.

On distingue deux fonctions de désentrelacement complémentaires:

- Le Désentrelacement Supervisé (DS), dans lequel on utilise les caractéristiques des signaux connues comme par exemple, les Fréquences (F), les PRI, les Durées d'Impulsion (DI) ou les paramètres intra impulsion (ou IP pour IntraPulse) pour reconnaître les impulsions provenant de ces signaux.

- Le Désentrelacement Non Supervisé (DNS), dans lequel on n'a pas connaissance de ces caractéristiques.

Dans la plupart des extracteurs ESM ou ELINT ces deux fonctions coopèrent comme illustré figure 2.

Les méthodes de DNS peuvent être segmentées entre :

- Celles qui utilisent des classifications (ou clustering) sur paramètres primaires de l'impulsion (DOA, F, DI, IP)
- Celles qui utilisent des classifications à partir des temps d'arrivée des impulsions (ou TOA pour Time Of Arrival suivant l'expression anglo saxonne) correspondant au paramètre secondaire PRI.

Dans la plupart des extracteurs les deux méthodes sont utilisées successivement comme par exemple selon le schéma figure 3.

De plus dans ces extracteurs le désentrelacement et le pistage sont réalisés de proche en proche en n'examinant pas la totalité des informations simultanément,

Un grand volume de données nécessite d'être traité par un capteur MRE (ESM ou ELINT), avec des temps de réaction rapide. En général la charge de calcul nécessaire évolue plus rapidement que l'évolution en puissance des processeurs (loi de Moore) du fait de l'augmentation du nombre de données à traiter et de la complexité jusqu'ici non linéaire des traitements. De façon non limitative, les raisons suivantes peuvent expliquer l'augmentation drastique des volumes de données !

- Les capteurs ELINT ont des sensibilités de plus en plus élevées pour la détection de certaines menaces.

- Les émissions sont agiles ce qui nécessite, pour capter au maximum la forme d'onde :

  - d'avoir des bandes de réception importantes,
  - d'avoir des temps d'écoute longs.

L'augmentation de la densité temporelle des impulsions introduit également des effets de superposition d'impulsions simultanées conduisant à perdre une partie des impulsions d'une forme d'onde par mitage ou moirage.

La canalisation de certains récepteurs impose de balayer la bande de réception utile, ne permettant l'acquisition de la forme d'onde que partiellement.

On conçoit que si on observe ces formes d'onde sur des temps longs, il va être possible de récupérer des indices statistiques et de les mettre en relation.

En résumé, on constate que :

- les volumes de données augmentent ;
- il serait utile d'avoir des analyses sur des temps d'écoute longs ;
- Il faut traiter les paramètres dans une analyse conjointe.

Les algorithmes actuels ne permettent pas de remplir ces différentes contraintes.

Si la complexité de l'algorithme n'est que quadratique cela signifie en pratique que traiter 1 seconde de durée d'écoute coûte 100 fois plus cher, en temps de calcul, que traiter 100 ms de durée d'écoute. Ce qui devient 10 000 pour 10 secondes. Les algorithmes actuels ont souvent des complexités plus que quadratiques. Ceci interdit l'application de ces algorithmes sur des durées importantes bien que ce soit intéressant pour faire apparaître des discriminants statistiques. Donnons deux exemples d'indices statistiques en temps long non triviaux : certaines valeurs de fréquence (idem PRIs) sont souvent associées sur une même DOA dans une même écoute ; certains radars balaient l'espace régulièrement et présentent une Période de Rotation d'Antenne ou PRA. Ces indices peuvent être utilisés en temps long alors qu'ils ne peuvent pas l'être en temps court.

Dans ce contexte, il existe un besoin pour des implémentations efficaces minimisant la complexité de calcul. L'optimum de cette complexité est la complexité linéaire c'est à dire le fait que le nombre des calculs croît linéairement avec le débit des données entrantes. Avec une complexité linéaire il devient possible d'analyser de très importants volumes de données, donc de travailler sur des temps longs avec une grande densité impulsionnelle.

Les principes classiquement utilisés en DNS reposent généralement sur la séparation en passages de lobes, la séparation en Direction d'Arrivée, la séparation par paramètres primaires (Fr, LI, IP) ou la séparation par histogramme de différence de temps d'arrivée (ou HDTOA pour Histogram of Difference Time Of Arrival selon la terminologie anglo saxonne).

La séparation en passages de lobes est basée sur la décorrélation statistique des dates de lobes pour un environnement de menaces. Pour une densité moyenne de menaces (et ayant procédé à un premier filtrage grossier sur la DOA ou/et la fréquence) les éclairements des différentes menaces apparaissent rarement « entrelacés ».

Cette technique est cependant plutôt adaptée aux détecteurs d'alerte (ou RWR pour Radar Warning Receiver) qui remplissent leur rôle d'alerte avec une sensibilité ne leur permettant pas en général d'intercepter les menaces sur diffus. Cette technique n'est évidemment pas adaptée à un système d'écoute qui doit intercepter les menaces sur diffus (ELINT) ou en environnement dense car dans ce cas le système voit toujours les émissions « entrelacées ».

Un paramètre fiable et facile à utiliser pour désentrelacer les impulsions est la direction d'arrivée (DOA). C'est une évidence de constater que c'est le seul paramètre qu'un radar moderne ne peut pas moduler ; c'est pourquoi la DOA quand elle est mesurée a un rôle primordial dans le procédé d'extraction. Mais dans de nombreux systèmes la DOA présente une qualité « moyenne » résolution de l'ordre de 10°. Il faut de plus faire attention quand la mesure de DOA est en défaut (mesure sur la polarisation croisée des aériens de réception) ou quand plusieurs émissions sont observées dans le même secteur angulaire.

Une autre méthode consiste à utiliser les paramètres primaires pour séparer les impulsions. Outre le paramètre DOA, la plupart des algorithmes de désentrelacement « classiques » sont basés sur l'utilisation de tris simples sur paramètres mono-impulsions dont essentiellement fréquence, et durée d'impulsion. Ces extracteurs à base de tris sur paramètres mono impulsions ont été utilisés pendant de nombreuses années et peuvent encore être utilisés dans certaines situations simples. On notera l'existence d'algorithmes de tri plus élaborés que des tris simples en ligne (impulsion par impulsion) basés sur une approche statistique (par exemple découpage des modes d'un histogramme) mais encore réduits à l'utilisation des paramètres primaires.

La généralisation de l'agilité impulsion à impulsion et de l'agilité par trains des formes d'onde rend aujourd'hui difficile voire caduque cette démarche. En effet dans un environnement dense il apparaît impossible dans certains secteurs angulaires (même avec un capteur de bonne résolution) de séparer deux émissions agiles inconnues par un simple tri fréquentiel. Soit les valeurs de fourchettes sont larges et on obtient un mélange des deux émissions. Soit les valeurs de fourchettes sont fines et on « pulvérise » chaque émission en une myriade de « groupements (ou clusters) d'impulsions » monofréquence. Pour résoudre l'agilité deux techniques sont apparues conjointement :

- d'une part l'utilisation du DTOA (pour Difference of Time Of Arrival).
- d'autre part l'utilisation de méthodes de recombinaison des groupes d'impulsions issus de tris monofréquence (+DOA) en vue de résoudre le problème posé par les agilités.

L'introduction de la différence de temps d'arrivée (ou DTOA) permet dans le cas d'un train d'impulsion à PRI fixe de tracker les impulsions correspondantes; il suffit alors de regarder quelles impulsions sont séparées par des « intervalles de temps égaux ».

On retrouve les deux étapes précédentes :

- Une étape de détection du groupement d'impulsions (ici un groupement autour d'une PRI) réalisée grâce à un histogramme des DTOA ou une Transformée de Fourier (TF) des TOA.
- Une étape de sélection des impulsions correspondant à une PRI, que nous appellerons « marquage » (ou « gating » selon le terme anglo saxon).

On peut utiliser plusieurs types de transformation des DTOA abusivement tous appelés histogrammes de DTOA (ou HDTOA), pour ne citer que les plus remarquables :

- Le HDTOA d'ordre k et ses variantes possibles (Histogramme complet, Histogramme progressif Alldiff, Histogramme progressif séquentiel) qui est une simple sommation des nombres de fois où un écart de temps est observé. Cet histogramme est celui le plus souvent cité ou utilisé. Il est équivalent à la fonction d'autocorrélation de la séquence des TOAs. Il présente le défaut de faire apparaître toutes les raies de PRIs ainsi que leurs combinaisons linéaires.
- Le HDTOA dit « compressé » qui somme un argument complexe utilisé pour prendre en compte le caractère périodique des DTOA : Extraction de la Période de Répétition de Motif (ou PRM). Il présente des défauts en présence de mitage, induisant parfois des pertes de la PRM sur des périodes de répétition variable (ou « staggers » selon le terme anglo saxon).
- Le HDTOA bidimensionnel qui étend la recherche des PRIs à la recherche de couples (ou transition) de PRIs significatifs. Il présente l'intérêt d'avoir un seuil d'interactions réduit par rapport aux précédents. Son défaut est le coût de calculs.
- L'histogramme des doublets qui permet de rechercher les PRM avec une grande efficacité. On montre qu'il correspond à une construction partielle de l'histogramme bidimensionnel et qu'il présente le même seuil d'interactions. Son intérêt est de réduire l'information contenue dans les TOAs aux seules raies PRM.
- L'Histogramme de Fourier. Les techniques fondées sur la construction d'histogrammes de DTOA ne sont pas robustes aux PRI jittées, surtout lorsqu'il y a un mélange. Le calcul de la transformée de Fourier d'un peigne de N Dirac centrés aux instants d'arrivée TOA des impulsions présente un maximum à la fréquence PRF correspondant à l'inverse de la PRI des impulsions. Le calcul de la TF à toutes les fréquences possibles est toutefois très coûteux. Différents algorithmes de ce type ont été décrits dans la littérature.

Ces histogrammes ont différentes propriétés. Tous ces histogrammes peuvent avoir une grande robustesse au mitage et au blanking.

Le marquage (ou « gating » selon le terme anglo saxon) à base de DTOA ayant isolé une PRI sur HDTOA ou une PRF sur périodogramme, on passe à une phase de recherche des impulsions correspondantes. Pour cela on extrait en plusieurs passes successives les trains d'impulsions correspondant à chaque PRM détectée. Le résultat est l'obtention de séquences d'impulsions à cette PRM.

Le choix parmi les variantes présentées est étroitement lié à la sévérité des environnements, à la qualité des mesures primaires, et au coût de calcul admissible sur la ressource CPU allouée pour l'application.

L'extraction à base de DTOA peut être étendue à toute structure temporelle « contrastée » de la forme d'onde. On constate de plus que pour les formes d'ondes agiles et non agiles la structure temporelle (les PRIS) est plus discriminante, plus caractéristique et plus stable que la structure fréquentielle. En effet il est plus simple de faire évoluer les fréquences d'émission que les jeux de PRIs utilisés.

Les techniques de désentrelacement basées sur le DTOA ont aussi leurs limites et voient ainsi leur efficacité diminuer avec l'apparition des Formes d'Onde à Agilité de PRI, agilité dans le sens d'une structure temporelle non stable. En effet une période de répétition variable (ou « Stagger ») de PRI est une émission dite agile en PRI mais reste très facile à traiter par un algorithme de désentrelacement basé sur le DTOA car le motif est stable dans le temps. A l'inverse les radars à balayage électronique peuvent émettre un signal qui vu d'un point de l'espace ne présente aucune structure temporelle apparente. Dans ce cas le désentrelacement ne peut se fonder sur le DTOA.

Bien que l'environnement électromagnétique soit composé d'une grande quantité de formes d'ondes à motif de PRI stables, la prise en compte conjointe des paramètres de tris classiques sera très utile pour résoudre le cas des signaux peu nombreux à PRI instable. En outre les techniques à base de DTOA peuvent être « piégées » par le synchronisme fortuit d'émissions à PRI identiques et perçues simultanément par le capteur. Dans ce cas l'information de séparation doit être apportée par d'autres paramètres (DOA, Niveau, Fréquence, Di, Ip...).

Un but de l'invention est notamment de corriger tout ou partie des inconvénients précités en proposant une méthode de séparation des trains d'impulsions radar imbriqués fiable, rapide et nécessitant peu de ressource.

A cet effet, l'invention a pour objet un procédé de désentrelacement non supervisé de trains d'impulsions comprenant :

- une étape Etp10 de constitution, pour chaque paramètre ou groupe de paramètres, de N histogrammes, N étant un entier supérieur à 1, à une ou plusieurs dimensions définissant des groupes d'impulsions par paramètre ou groupe de paramètres, lesdits histogrammes étant représentatifs des trains d'impulsions;

- une étape Etp20 d'extraction de modes à partir desdits histogrammes ;

- une étape Etp30 de constitution de groupes d'intérêt à partir desdits modes extraits ;

- une étape Etp40 d'enrichissement de la description des impulsions à l'aide de labels traduisant leur appartenance à au moins un groupe d'intérêt ;

- une étape Etp50 de classement croisé non supervisé des modes afin de réorganiser les impulsions enrichies par similarité.

Selon un mode de mise en oeuvre, l'étape Etp20 comprend :

- une étape Etp21 de seuillage des histogrammes ;

- une étape Etp22 de décomposition des histogrammes en modes ;

- une étape Etp23 de caractérisation des modes ;

Selon un mode de mise en oeuvre, l'étape Etp50 de classement des modes consiste à créer progressivement au moins une classe d'impulsions-modes homogènes, l'étape comprenant :

- à l'initialisation une recherche du mode ayant un maximum d'intérêt, ce mode formant la première classe, puis, pour chaque mode restant :

- une étape Etp51 de recherche, parmi les modes restants, du mode ayant un cardinal d'intersection avec la classe en cours le plus grand ;

- une étape Etp52 de recherche de la partition du mode trouvé, permettant de maximiser un critère de regroupement avec la ou les classes en cours ;

- une étape Etp53 de fusion du mode avec la ou les classes en cours.

Selon un mode de mise en oeuvre, l'étape Etp50 de classement comprend :

- une étape Etp56 de classification des impulsions en fonction de leurs liens de corrélation mutuelles ;

- une étape Etp57 de classification des modes en fonction de leurs liens de corrélation mutuelles ;

- une étape Etp58 de regroupement des modes et impulsions en classes.

De façon avantageuse, le procédé selon l'invention, grace à sa faible complexité, permet d'analyser les signaux reçus sur des temps longs avec une grande densité impulsionnelle. Il permet également une analyse conjointe des différents paramètres ou indices statistiques.

D'autres particularités et avantages de la présente invention apparaîtront plus clairement à la lecture de la description ci-après, donnée à titre illustratif et non limitatif, et faite en référence aux dessins et annexes, dans lesquels :

- La figure 1 illustre le désentrelacement ;

- La figure 2 illustre la coopération entre les désentrelacements supervisé et non supervisé ;

- La figure 3 représente un exemple de désentrelacement non supervisé utilisant des classifications RF-DOA suivi par des classifications HDTOA;

- La figure 4 représente un exemple de mise en oeuvre du procédé selon l'invention ;

- La figure 5 représente un exemple de représentation graphique d'un histogramme RF-DTOA ;

- La figure 6 représente un exemple de mise en oeuvre de l'étape d'extraction de modes ;

- Les figures 7a et 7b illustrent l'étape d'extraction des modes d'un histogramme ;

- La figure 8 représente différents choix de classification possible ;

- La figure 9 représente un exemple de structure pyramidale illustrant les liens de corrélation entre impulsions ;

- La figure 10 représente un exemple de structure pyramidale illustrant les liens de corrélation entre modes.

Le procédé de désentrelacement non supervisé par enrichissement N dimensions selon l'invention repose sur l'utilisation conjointe des paramètres primaires et des paramètres secondaires comme par exemple la différence de temps d'arrivée (DTOA) pour séparer chaque émission d'intérêt.

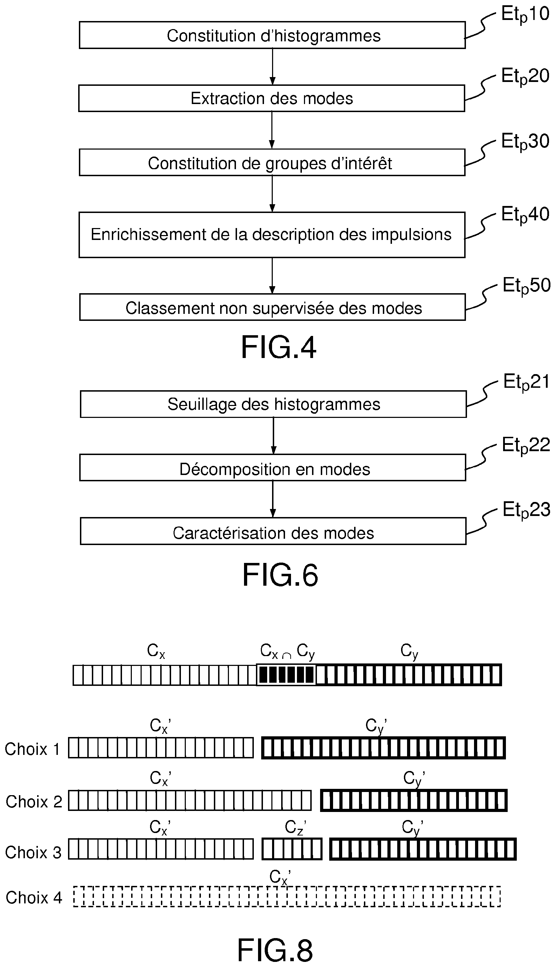

En référence à la figure 4 le procédé de désentrelacement selon l'invention peut comprendre une étape Etp10 de constitution d'histogrammes, une étape Etp20 d'extraction de modes, une étape Etp30 de constitution de groupes d'intérêt, une étape Etp40 d'enrichissement de la description des impulsions et une étape Etp50 de classement non supervisé des modes.

Au cours de l'étape Etp10 des histogrammes sont constitués dans toutes les dimensions. Cette étape permet de réaliser une description multidimensionnelle conjointe (fréquence, DTOA, DOA, phase des trains temporels, paramètres intra-impulsion, LI....) d'un ensemble d'impulsions. Cette description conjointe permet en particulier de construire des histogrammes liant paramètres primaires, comme par exemple les fréquences, les DOA, les largeurs d'impulsion (LI),... et secondaires comme par exemple les PRI. On peut aussi ajouter des modes de regroupement comme la PRA, et plus généralement des indices statistiques construits en temps long comme des groupes de fréquence ou PRI cooccurentes, des groupes de point d'accumulation, des iso-mesures de type localisation.

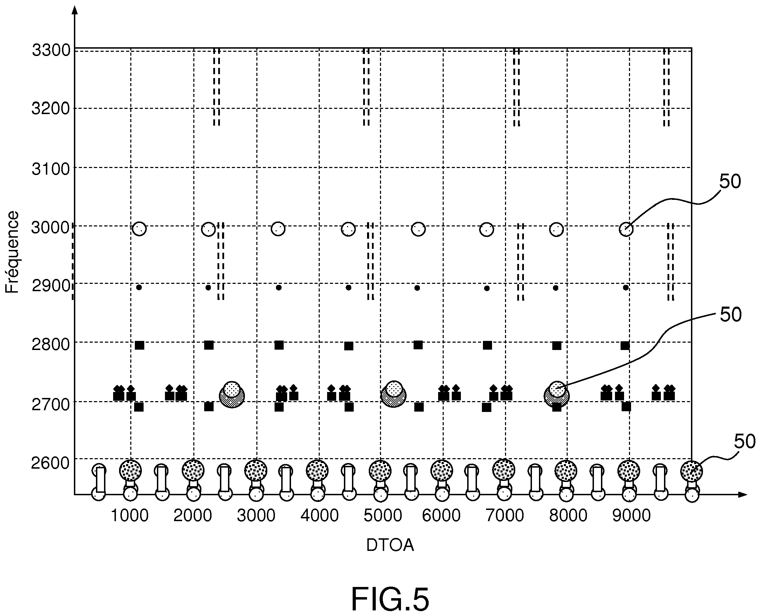

Pour comprendre le principe, le plus didactique de ces histogrammes est l'histogramme RF-DTOA associant un paramètre primaire c'est à dire mono-impulsion et un paramètre secondaire calculé sur 2 impulsions. A titre d'illustration, la figure 5 représente un tel histogramme dans un repère ayant pour abscisse les DTOA et pour ordonnée les fréquences. Dans cette représentation, la taille des points est relative au nombre d'impulsions se trouvant dans la cellule (Fréquence, DTOA). On remarque que cette représentation permet de distinguer aisément les différentes formes d'ondes (FO) entrelacées. Pour cela on s'appuie sur les alignements horizontaux ou verticaux de points observés, ce qui revient à s'intéresser aux projections sur les deux axes (ici fréquence et DTOA) et aux liens entre les modes en projection.

Il est également aisé de reconnaître les structures temporelles ou fréquentielles les plus contrastées par rapport aux structures diffuses c'est-à-dire les structures comportant le plus d'impulsions. On pourra donc commencer le marquage en s'intéressant aux signaux aux caractéristiques les plus spécifiques donc facilement extractibles du mélange sans risque d'ambiguïté

Bien entendu les histogrammes ne se limitent pas à ceux en deux dimensions (2D) et sur la représentation graphique on aurait pu ajouter Azimut (en z), LI en(v)... On parle d'histogrammes à N Dimensions ou ND.

En référence à la figure 6, l'étape Etp20 d'extraction de modes peut comprendre une étape Etp 21 de seuillage des histogrammes, une étape Etp22 de découpe en modes et une étape Etp23 de caractérisation des modes.

Pour le seuillage des histogrammes, on peut distinguer deux cas, le cas à une dimension (1 D) et le cas à deux dimensions (2D) dans lequel on utilise systématiquement la DOA.

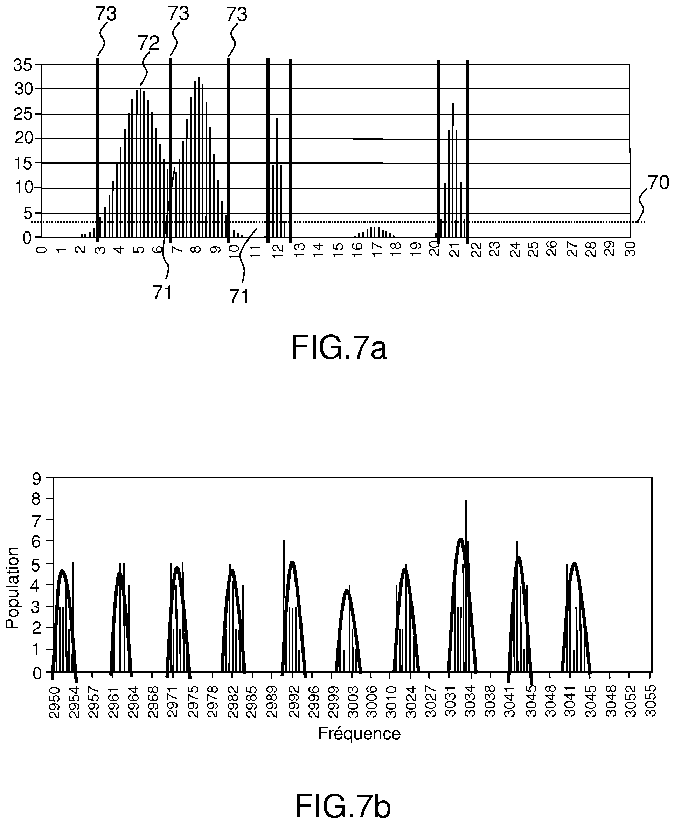

En référence aux figures 7a et 7b, les histogrammes sont seuillés de façon à éliminer les valeurs non significatives, c'est-à-dire inférieur à une valeur seuil 70 prédéterminée.

L'étape Etp 22 de découpe en modes consiste à sélectionner des séparatrices dans les « vallées » 71 de l'histogramme qui se trouvent entre deux pics 72 et pour lesquelles la différence de hauteur entre la vallée 71 et les pics 72 est significative. La signifiance statistique peut être déterminée selon un test du khi2, par exemple avec la formule :

$$\chi = \frac{2(HV - HE)^2}{HE} \geq \chi_{\alpha,1}^2$$

Où HV est égal à la hauteur de l'histogramme dans la « vallée » 71 et HE est la valeur moyenne des hauteurs dans la « vallée » 71 et pour le pic de plus faible hauteur. Pour une confiance de 95%, $\chi_{0.05,1}^2 = 3.843$.

Chaque mode est ensuite caractérisé par sa moyenne et son écart type, par exemple par approximation gaussienne. Les modes sont étendues au-delà des séparatrices 73 en retenant les données à par exemple, plus ou moins 3 sigmas estimés. Dans la plupart des cas les modes extraits ne présentent pas de mélange. Quand deux pics sont proches on décide que les données appartiennent à la fois aux deux pics.

Dans le cas où l'on utilise systématiquement l'Azimut pour chaque dimension (cas 2D) l'étape d'extraction des modes peut utiliser un algorithme de détection des maxima puis une découpe des modes autour de ces maxima par exemple par une méthode de segmentation par ligne de partage des eaux.

Les modes de ces histogrammes définissent des groupes (ou clusters selon la terminologie anglo saxonne) d'impulsions par paramètre. Chaque groupe peut être décrit par la valeur moyenne du paramètre, l'écart type, l'effectif et par la liste des impulsions consécutives. On peut calculer ensuite le contraste de chaque mode et ces modes peuvent être classés par contraste décroissant. Ainsi, des groupes d'impulsions ou groupes d'intérêt sont formés au cours d'une étape Etp30, par exploration des modes toutes dimensions par ordre d'effectif décroissant. Les groupes formés sont caractérisés par leurs paramètres comme par exemple DOA, liste RF, PRM, Phase, paramètres intra impulsions....

Chaque impulsion est ensuite enrichie au cours d'une étape Etp40 d'enrichissement de la description des impulsions par son appartenance à un groupe (F, DOA) ou à plusieurs groupes (PRM, phase, DOA). Ainsi après l'enrichissement à N dimensions on dispose des modes dans les différentes dimensions et des impulsions à description enrichie.

Les impulsions enrichies peuvent se présenter sous la forme d'une table des impulsions enrichies. A titre illustratif l'annexe 1 présente un exemple d'une telle table.

Les groupes d'impulsions formés dans les différentes dimensions ou modes sont non seulement caractérisés par leur valeur moyenne, écart type expérimental, effectif mais également par la liste des labels des impulsions appartenant au mode comme illustré annexe 2.

Dans un autre mode de réalisation de l'invention, cette liste de labels peut être codée sous forme d'une table de valeurs binaires indiquant l'appartenance ou non de l'impulsion i au mode.

De façon avantageuse, la mémorisation des labels des impulsions sur les différents modes permet le calcul de liens de corrélation entre modes. Ceci permet d'éviter d'avoir à itérer sur des tris séquentiels d'impulsions.

La méthode repose sur la dualité individus/variables. Les impulsions sont ici les individus et les différents modes (DTOA, Fréquences, DOA, LI ...) sont les variables. Les variables seront traitées en utilisant les individus qui sont liés à chaque valeur de la variable (mode) afin d'obtenir diverses informations.

L'intérêt de l'enrichissement réside dans le fait de mesurer les propriétés des modes et leurs relations, c'est-à-dire leur appartenance à un même train, par des opérateurs d'intersection et d'union sur les listes d'impulsions appartenant à chaque mode significatif.

On distingue le lien de corrélation intra dimension, par exemple entre deux fréquences ou deux PRM, et le lien de corrélation inter dimension, par exemple entre une fréquence et une PRM.

Pour les paramètres bi-impulsions, le lien de corrélation entre deux modes peut être donnée par la distance ensembliste. Le lien de corrélation entre deux PRM peut être donnée par la formule:

$$d(R_1, R_2) = \frac{card(R_1 \cup R_2) - card(R_1 \cap R_2)}{card(R_1 \cup R_2)}$$

Pour les paramètres mono-impulsion, le lien de corrélation entre deux modes peut être donnée par la distance euclidienne classique.

Le lien de corrélation inter dimension entre une PRM détectée et une fréquence peut être réalisée en considérant la cardinalité de l'intersection entre les listes d'impulsions de la PRM et de la Fréquence considérées.

$$d\big(R_{i,F}, R_{j,PRM}\big) = 1 - \frac{card\big(R_{i,F} \cap R_{j,PRM}\big)}{card\big(R_{i,F}\big)}$$

Sur la base de ces liens de corrélation inter et intra-dimensions il est ainsi possible de regrouper les modes qui sont simultanément proches.

Une propriété importante de l'enrichissement est qu'on peut retrouver les modes multidimensionnels conjoints à partir des modes de faible dimension construits et du tableau des impulsions enrichies. Cette mémorisation est de plus linéaire c'est-à-dire qu'elle reste proportionnelle au nombre des impulsions. Un codage direct de la statistique multidimensionelle serait beaucoup plus coûteux en temps de calcul.

En référence à l'annexe 4, l'étape Etp50 a pour but de réorganiser les impulsions enrichies ou tableaux impulsions-modes de façon à faire ressortir les différentes classes d'impulsions. Cette réorganisation utilise une classification croisée dont l'objectif principal est de fournir simultanément une partition des deux ensembles individus et variables. Cette classification peut être réalisée par plusieurs méthodes suivant le type de tableaux de données envisagés (tableau binaire, tableau de contingence...).

Le but recherché est de former des classes ou blocs d'impulsions-modes homogènes. On veut que les impulsions d'une même classe se ressemblent et ne ressemblent pas à celles des autres classes. Par symétrie impulsions/modes on obtient également un critère sur les modes : les modes d'une même classe se ressemblent car leurs listes d'impulsions présentent de fortes intersections.

On défini donc les critères de similarité suivants :

Dans une même classe:

- Les impulsions partagent un maximum de composantes ;
- Les composantes partagent un maximum d'impulsions.

Entre deux classes:

- Les impulsions partagent un minimum de composantes ;
- Les composantes partagent un minimum d'impulsions.

De façon à accélérer le classement on dispose également de contraintes. A titre d'exemple, ces contraintes peuvent être :

- Deux composantes DOA (idem pour deux composantes PRM) « disjointes » ne peuvent appartenir à une même classe ;
- Les fréquences d'une même " phase de PRM " ne doivent pas être séparées ; Etc...

Le traitement peut s'effectuer en utilisant seulement les critères de similarité ou en utilisant les critères de similarité et les contraintes. L'utilisation des critères de similarité permet à lui seul d'aboutir au résultat optimal, les contraintes ne sont qu'un accélérateur de calcul. Dans certains cas, le classement pourra être effectué en n'utilisant que les contraintes.

Le critère de similarité entre impulsions ou lien de corrélation entre deux impulsions peut être donné par la formule :

$$C_{ii'} = \sum_{j=1}^{P} x_i^j x_{i'}^j$$

Où $x_i^j$ représente un indicateur binaire indiquant si l'impulsion i appartient au mode j défini par :

$x_i^j = 1$ si l'impulsion i appartient au mode j

$x_i^j = 0$ si l'impulsion i n'appartient pas au mode j

Et où P représente le nombre total de modes.

De même, de façon symétrique, on peut définir un critère de similarité entre modes par la formule :

$$C^{jj'} = \sum_{i=1}^{N} x_i^j x_i^{j'}$$

Où $x_i^j$ représente un indicateur binaire indiquant si le mode j contient l'impulsion i défini par :

$x_i^j = 1$ si le mode j contient l'impulsion i

$x_i^j = 0$ si l'impulsion i n'appartient pas au mode j

Et où N représente le nombre total d'impulsions.

Calculer le critère de similarité revient à faire le produit scalaire entre deux impulsions ou deux modes. L'annexe 5a illustre par des exemples le critère de similarité entre les impulsions $I_1$ et $I_2$ ainsi que le critère pour les impulsions $I_3$ et $I_4$. $C_{I1,I2}=4$ signifie que les impulsions $I_1$ et $I_2$ sont toutes les deux présentes dans 4 modes (cf. cases entourées).
De même, l'annexe 5b présente le critère de similarité entre les modes AOA1 et PRM1 ainsi que celui entre les modes AOA2 et F1.
Pour réaliser un groupe de modes-impulsions homogène ou groupement d'intérêt, on va définir un critère de regroupement. Pour cela, on recherche une partition en classes où les individus de la classe sont les plus similaires les uns aux autres et les individus de classes différentes les plus dissimilaires. Une partition des impulsions peut être définie par une matrice carrée binaire X dont le terme général est défini par:

$$X_{ii'} = \begin{cases} 1 & \text{si i et i' sont dans la même classe} \\ 0 & \text{sinon} \end{cases}$$

Plusieurs critères peuvent correspondre à cette définition. Parmi ceux-ci, se trouve le critère de Condorcet. Il peut s'écrire de la façon suivante :

$$C(X) = \sum_{i=1}^{N} \sum_{i'=1}^{N} \left( C_{ii'} X_{ii'} + \overline{C}_{ii'} \overline{X}_{ii'} \right)$$

Où: N représente le nombre d'impulsions,
$C_{ii'}$ représente le critère de similarité entre les impulsions $I_n$ et $I_{n'}$
$X_{ii'}$ représente l'élément de rang i,i' de la matrice carré X précédemment définie.

Les tableaux annexe 6b et 6c présentent des exemples de partition en différentes classes d'une classification de 20 impulsions et 10 modes présentée annexe 6a.
L'annexe 6b représente une classification des impulsions et des modes en 3 classes $Cl_1$, $Cl_2$ et $Cl_3$. Dans l'exemple les classes 3 et 2 se partagent la fréquence F2, et les classes $Cl_2$ et $Cl_1$ se partagent les fréquences F3 et F4. Pour cette partition, le critère est de 1076. Ce classement est optimal c'est-à-dire qu'il présente un critère maximal.
L'annexe 6c présente un classement alternatif en 5 classes différentes $Cl_{11}$, $Cl_{12}$, $Cl_{13}$, $Cl_{14}$ et $Cl_{15}$. Cette partition n'est pas optimale, la valeur du critère pour cette partition est 912 donc inférieure à 1076.
Un premier exemple de mode de mis en oeuvre de l'étape Etp50 de classement non supervisé va être présenté. Ce classement des modes consiste principalement à créer progressivement au moins une classe d'impulsions-modes homogènes. Ce classement comprend à l'initialisation une recherche du mode ayant un maximum d'intérêt c'est-à-dire le mode ayant le plus grand cardinal. Ce mode va former la première classe, puis, pour chaque mode restant, le classement comprend :

- une étape Etp51 de recherche, parmi les modes restants, du mode ayant un cardinal d'intersection avec la classe en cours le plus grand ;

- une étape Etp52 de recherche de la partition du mode trouvé, permettant de maximiser un critère de regroupement avec la ou les classes en cours ;
- une étape Etp53 de fusion du mode avec la ou les classes en cours.

L'initialisation de l'étape consiste à rechercher le mode qui est le plus intéressant à prendre en premier, c'est-à-dire le mode dont la contribution au critère est la plus forte. Ce mode formera la première classe $C_1$.

On rappelle que la contribution au critère du mode q est donnée par la formule :

$$Contrib(q) = \sum_{i \in Cq, i' \in \overline{C}_q} C_{ii'} - \alpha \sum_{i \in C_q, i' \in \overline{C}_q} \min(C_{ii}, C_{i'i'})$$

Où:

$C_{ii'}$ représente la similarité ou le lien de corrélation entre modes i et i',
$\alpha$ représente un scalaire que l'on peut prendre égale à 1

On s'intéresse ensuite à l'intersection entre cette première classe et les modes restants, on s'intéresse plus particulièrement au cardinal de cette intersection.

Suivant un premier mode de mise en oeuvre du procédé on peut classer les modes restant par ordre décroissant des cardinaux d'intersection.

Suivant un autre mode de mise en oeuvre, on recherche parmi les modes restant, celui dont le cardinal d'intersection est le plus grand. Ce mode formera la classe $C_2$.

En référence à la figure 8, si on considère les classes $C_1$ et $C_2$, ($C_x = C_1$ et $C_y = C_2$), il existe quatre choix possible pour le regroupement de ces classes. L'intersection $C_1 \cap C_2$ peut appartenir à la nouvelle classe $C'_2$ (choix 1), à la nouvelle classe $C'_1$ (choix 2) ou former une nouvelle classe $C'_3$ (choix 3). Une quatrième option consiste à considérer un nouvelle classe $C'_1$ regroupant les classes $C_1$ et $C_2$ (choix 4).

On considère donc ces quatre options et pour chacune d'elle on calcule le critère de regroupement correspondant et on retient le choix qui maximise ledit critère de regroupement.

On continue ainsi, pour chaque mode restant, en considérant à chaque fois l'intersection entre la ou les classes ($C'_1$, $C'_2$, $C'_3$) que l'on vient de former et le mode ayant le cardinal d'intersection de plus grand avec la ou les nouvelles classes.

Si le choix 1 est retenu, les nouvelles classes formées sont: $C'_1 = C_1 - C_2$ et $C'_2 = C_2$ ;
Si le choix 2 est retenu, les nouvelles classes deviennent : $C'_1 = C_1$ et $C'_2 = C_2 - C_1$ ;
Si le choix 3 est retenu, les nouvelles classes deviennent : $C'_1 = C_1$, $C'_2 = C_2$ et $C'_3 = C_1 \cap C_2$;
Si le choix 4 est retenu, la nouvelle classe devient : $C'_1 = C_1 \cup C_2$.

On ne s'intéresse qu'aux intersections non nulles. Dans le cas où le mode considéré aurait une intersection nulle, il formerait une nouvelle classe.

Comme cité précédemment, on possède également des contraintes pour accélérer le calcul. Donc pour chaque mode considéré, on recherche le choix qui maximise le critère et qui respecte les contraintes.

Il est à noter que l'on classe plusieurs données à la fois. En effet chaque classe Cx et Cy sont des classes d'impulsions.

En référence aux annexes 8 à 15, l'étape Etp 50 de classement non supervisé va être illustrée à travers un exemple nullement limitatif. Dans cet exemple on va considérer 20 impulsions $I_1$ à $I_{20}$.

L'annexe 6a correspond à l'information obtenue après le traitement d'enrichissement des impulsions. Ce tableau croise les impulsions et les différents modes ($DOA_i$, $F_i$, $PRM_i$).

Après classement des modes par ordre croissant de leur contribution on obtient le tableau annexe 7.

On commence le classement non supervisé avec le mode 10 (PRM3). Ce mode contient les impulsions $I_{12}$ à $I_{20}$ qui vont former la première classe $C_1$. On considère ensuite le mode dont le cardinal d'intersection avec la classe C1 est le plus élevé à savoir le mode 9 (DOA3). Les modes 9 et 10 sont identiques, on est donc dans le cas de figure où $C_x \cap C_y = C_x \cup C_y = C_x = C_y$, les 4 choix sont donc identiques. Les modes 10 et 9 forment donc une seule classe $C_1 = \{I_{12}, I_{13}, I_{14}, I_{15}, I_{16}, I_{17}, I_{18}, I_{19}, I_{20}\}$ (cf. annexe 8).

On considère ensuite le mode 8 (F4) qui est le mode ayant la plus grande intersection avec la classe C1 ($\overline{C_1 \cap F_4} = 5$) (cf. annexe 9).

On teste les 4 choix suivants:

- $C_{1'} = C_1 - F_4$, $F_{4'} = F_4$ (critère 243)
- $C_{1'} = C_1$, $F_{4'} = F_4 - C_1$ (critère 303)
- $C_{1'} = C_1 - F_4$, $F_{4'} = F_4 - C_1$, $C_{z'} = C_1 \cap F_4$ (critère 263)
- $C_{1'} = C_1 \cup F_4$ (critère 235)

Le critère le plus élevé étant 303, on retient la solution consistant à séparer les modes en deux classes, à savoir $C_1 = \{I_{12}, I_{13}, I_{14}, I_{15}, I_{16}, I_{17}, I_{18}, I_{19}, I_{20}\}$ et $C_2 = \{I_{10}, I_{11}\}$.

On poursuit (cf. annexe 10 a) en considérant le mode 7 (F3) qui est le mode suivant ayant la plus grande intersection avec la nouvelle classe C1 ($\overline{C_1 \cap F_3} = 3$)

Comme précédemment on teste les 4 choix suivant:

- $C_{1'} = C_1 - F_3$, $F_{3'} = F_3$ (critère 251)
- $C_{1'} = C_1$, $F_{3'} = F_3 - C_1$ (critère 307)
- $C_{1'} = C_1 - F_3$, $F_{3'} = F_3 - C_1$, $C_{z'} = C_1 \cap F_3$ (critère 267)
- $C_{1'} = C_1 \cup F_3$ (critère 231)

A l'issue de cette étape (cf. annexe 10 b), en prenant en compte le critère le plus élevée, on aboutit à 3 nouvelles classes : $C_1 = \{I_{12}, I_{13}, I_{14}, I_{15}, I_{16}, I_{17}, I_{18}, I_{19}, I_{20}\}$, $C_2 = \{I_{10}, I_{11}\}$ et $C_3 = \{I_8, I_9\}$.

On peut remarquer qu'en utilisant les contraintes en PRM ou en DOA (cf. annexe 11), à savoir «deux composantes DOA (ou deux composantes PRM) disjointes ne peuvent appartenir à une même classe», aurait permis de réaliser plus vite cette étape pour le même résultat. La prise en compte de ces contraintes aurait interdit la formation d'une même classe avec des modes n'ayant pas la même DOA. Le même raisonnement peut être appliqué pour des modes n'ayant pas la même PRM.

On poursuit (cf. annexe 12a) en considérant le mode 6 ($\overline{C_2 \cap PRM_2} = 2$) et on teste les 4 choix suivants :

- $C_{2'} = C_2 - PRM_2 = \varnothing$, $PRM_{2'} = PRM_2$ (critère 84)
- $C_{2'} = C_2$, $PRM_{2'} = PRM_2 - C_2$ (critère 68)
- $C_{2'} = C_2 - PRM_2 = \varnothing$, $PRM_{2'} = PRM_2 - C_2$, $C_{z'} = C_2 \cap PRM_2 = C_2$

(identique au choix précédent)

- $C_{2'} = C_2 \cup PRM_2 = PRM_2$ (identique au premier choix)

A ce stade on a 3 classes : $C_1 = \{I_{12}, I_{13}, I_{14}, I_{15}, I_{16}, I_{17}, I_{18}, I_{19}, I_{20}\}$, $C_2 = \{I_6, I_7, I_8, I_9, I_{10}, I_{11}\}$ et $C_3 = \{I_8, I_9\}$. On continue en testant l'intersection du mode 6 avec la classe C3 ($\overline{C_3 \cap PRM_2} = 2$). La résolution est identique, on n'a que deux choix.

A l'issue de cette étape (cf. annexe 12b) on a donc 2 classes à savoir: $C_1 = \{I_{12}, I_{13}, I_{14}, I_{15}, I_{16}, I_{17}, I_{18}, I_{19}, I_{20}\}$ et $C_2 = \{I_8, I_9, I_{10}, I_{11}\}$. Les anciennes classes $C_2$ et $C_3$ qui étaient séparées se retrouvent maintenant réunies ensemble.

On continue en considérant le mode 5 (DOA2). Comme DOA2=C2 la solution reste identique.

On poursuit (cf. annexe 13) en considérant le mode 4 (F2). L'intersection entre le mode 4 et la classe 1 étant nulle ($\overline{C_1 \cap F_2} = 0$), il n'y a aucun test à effectuer. $\overline{C_1 \cap F_2} = 2$, on teste les 4 choix :

- $C_{2'} = C_2 - F_2$, $F_{2'} = F_2$ (critère 179)
- $C_{2'} = C_2$, $F_{2'} = F_2 - C_2$ (critères 207)
- $C_{2'} = C_2 - F_2$, $F_{2'} = F_2 - C_2$, $C_{z'} = C_2 \cap F_2$ (critère 191)
- $C_{2'} = C_2 \cup F_2$ (critère 123)

A l'issue de cette étape, une nouvelle classe $C_3$. On a les classes : $C_1 = \{I_{12}, I_{13}, I_{14}, I_{15}, I_{16}, I_{17}, I_{18}, I_{19}, I_{20}\}$, $C_2 = \{I_6, I_7, I_8, I_9, I_{10}, I_{11}\}$ et $C_3 = \{I_3, I_4, I_5\}$.

On considère maintenant le mode 3 (F1). Ce mode n'intervient pas sur les classes $C_1$, $C_2$ et $C_3$ ($\overline{C_1 \cap F_1} = 0$ $\overline{C_2 \cap F_1} = 0$ et $\overline{C_3 \cap F_1} = 0$).

On poursuit (cf. annexe 14) avec le mode 2 (PRM1). Ce mode n'intervient ni sur la classe $C_1$ ni sur la classe $C_3$ ($\overline{C_1 \cap PRM_1} = 0$ et $\overline{C_2 \cap PRM_1} = 0$). Le mode 2 a une intersection non nulle avec le classe $C_3$ ($\overline{C_3 \cap PRM_1} = 3$), on teste donc les 4 choix :

- $C_{3'} = C_3 - PRM_1 = \varnothing$, $PRM_{1'} = PRM_1$ (critère 63)

- $C_{3'} = C_3$, $PRM_{1'} = PRM_1-C_3$ (critère 51)
- $C_{3'} = C_3-PRM_1 = \varnothing$, $PRM_{1'} = PRM_1-C_3$, $C_{z'} = C_3 \cap PRM_1 = C_3$

(Cas identique au deuxième choix)

- $C_{3'} = C_3 \cup PRM_1$ (Cas identique au premier choix)

On retient le premier choix, on a donc 3 classes : $C_1 = \{I_{12}, I_{13}, I_{14}, I_{15}, I_{16}, I_{17}, I_{18}, I_{19}, I_{20}\}$, $C_2 = \{I_6, I_7, I_8, I_9, I_{10}, I_{11}\}$ et $C_3 = \{I_1, I_2, I_3, I_4, I_5\}$.

On remarque que cette solution aurait pu être directement accessible en n'utilisant que les contraintes sur les PRM et les DOA.

Comme le mode 1 (DOA1) est identique à la classe C3, la solution reste inchangée. La solution finale (cf. annexe 15) est donc une partition en trois classes : $C_1 = \{I_{12}, I_{13}, I_{14}, I_{15}, I_{16}, I_{17}, I_{18}, I_{19}, I_{20}\}$ $C_2 = \{I_6, I_7, I_8, I_9, I_{10}, I_{11}\}$ et $C_3 = \{I_1, I_2, I_3, I_4, I_5\}$.

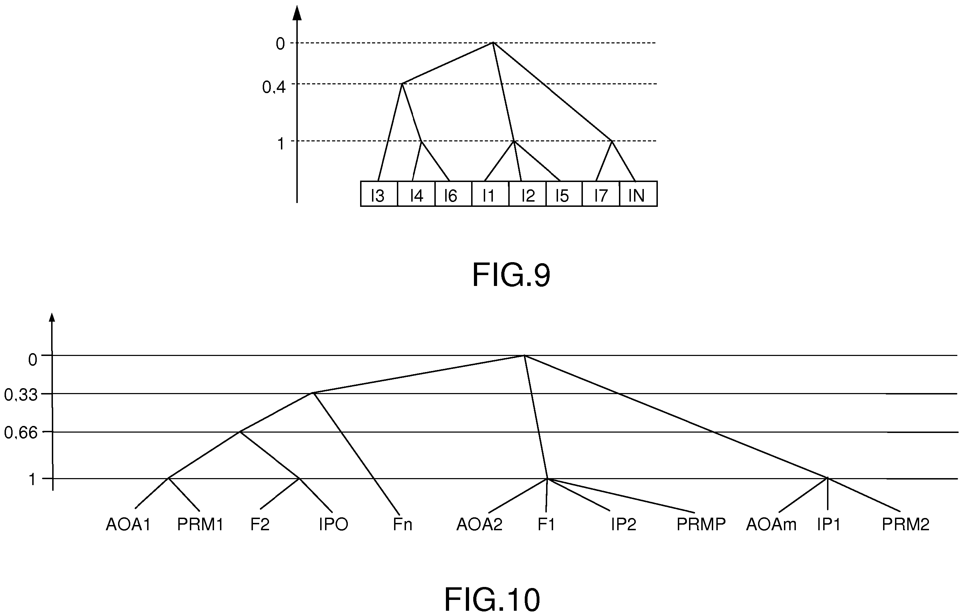

En référence aux annexes 16 à 19 et aux figures 9 et 10 un nouvel exemple de mode de mise en oeuvre de l'étape de classement non supervisé va être présenté. Ce classement repose sur une classification binaire croisée des modes. Cette méthode comprend principalement trois étapes, une étape Etp 56 de classification des vecteurs impulsion en fonction de leur lien de corrélation, une étape Etp 57 de classification des vecteurs mode en fonction de leur lien de corrélation, une étape Etp 58 de regroupement des modes et impulsions en classes.

L'annexe 16 représente un tableau de n impulsions enrichies non classées, notées $I_1$ à $I_N$, comportant différents modes.

L'annexe 17 représente un tableau des liens de corrélation entre vecteurs impulsions indiquant les liens de corrélation entre chaque impulsion. On peut organiser ces liens de corrélation de la plus forte corrélation à la plus faible corrélation. Par exemple, au niveau 1, on peut rapprocher $I_4$ et $I_6$ ou $I_1$, $I_2$, et $I_5$ car ils ont le même lien de corrélation. De même, au niveau 0,4 les impulsions $I_3$, $I_4$ et $I_6$ se rejoignent. Après avoir fixé un seuil à une valeur $S_1$, on rapproche les impulsions dont le lien de corrélation est inférieure à un ce seuil de de corrélation $S_1$. On peut donc regrouper les impulsions $\{I_1, I_2, I_5\}$, $\{I_7, I_N\}$ et $\{(I4,I6), (I3)\}$. Ainsi, dans le tableau annexe 16 lorsque l'on rapproche les vecteurs impulsions suivant les liens de corrélation, on obtient le tableau reclassé présenté annexe 18.

Comme le classement utilise une méthode de classification croisée, l'étape de classement utilise également les liens de corrélation entre modes. L'annexe 19 présente les liens de corrélation entre les différents modes. On rappelle que les liens de corrélation d entre deux impulsions ou entre deux modes peuvent être calculées à l'aide de la formule :

$$d(R_1, R_2) = \frac{card(R_1 \cup R_2) - card(R_1 \cap R_2)}{card(R_1 \cup R_2)}$$

Comme précédemment ces liens de corrélation entre modes peuvent être représentés sous la forme d'une structure pyramidale présentée figure 10. Cette structure fait apparaitre des groupements de modes. Après avoir fixé un deuxième seuil de corrélation à une valeur $S_2$, on rapproche les modes dont le liens de corrélation est inférieur à un ce seuil de corrélation $S_2$. Dans notre exemple, on peut donc regrouper les modes $\{AOA_1, PRM_1, F_2, IPo, F_N\}$, $\{AOA_2, F_1, IP_2, PRMp\}$ et $\{AOA_m, IP_1, PRM_2\}$. On obtient ainsi le tableau reclassé annexe 20. Dans ce tableau réorganisé on voit apparaitre des regroupements d'intérêt $(CI_1, CI_2, CI_3)$ correspondant aux différentes classes. Les groupements d'intérêt peuvent se lire dans les blocs de 1 de la matrice réorganisée.

La solution obtenue dépendra des seuils de corrélation choisis. En choisissant un seuil de 1, on obtient une solution dans laquelle tous les modes et/ou toutes les impulsions sont regroupées, on a une confusion maximale. A l'inverse en choisissant un seuil de 0, on obtient un éclatement maximal des modes et des impulsions.

De façon avantageuse, cette implémentation est beaucoup plus rapide que la méthode présentée précédemment car elle ne manipule que des valeurs binaires. Cette implémentation peut donc être projetée sur des matériels travaillant en binaire et des composants de calcul extrêmement élémentaires comme par exemple des réseaux logiques programmables ou FPGA pour « Field Programmable Gate Arrays » selon l'acronyme anglo saxon qui vont traiter l'algorithme. De plus ces composants vont pouvoir paralléliser les calculs réduisant ainsi les temps de traitement.

Dans l'algorithme de recherche du classement optimal on est amené dans différentes étapes à calculer les similarités ou les liens de corrélation de toutes les classes 2 à 2 soit pour un couple de classes C :

$$\sum_{i \in C_l, i' \in C_{q'}} C_{ii'}$$

Si les 2 classes comportent respectivement n et m impulsions, alors la complexité de ce calcul sera d'ordre O(nxm). Cette complexité peut être évitée. En effet :

$$\sum_{i,i'} C_{ii'} = \sum_{i,i'} \sum_{j=1}^{P} x_i^j x_{i'}^j = \sum_{j=1}^{P} \sum_{i,i'} x_i^j x_{i'}^j$$

puis

$$\sum_{i,i'} x_i^j x_{i'}^j = \sum_i x_i^j \sum_{i'} x_{i'}^j = r_j^q r_j^{q'}$$

et finalement

$$\sum_{i \in C_l, i' \in C_q} C_{ii'} = \sum_{j=1}^{P} r_j^q r_j^{q'} = \vec{R}^q . \vec{R}^{q'}$$

On obtient alors un calcul d'ordre O(n+m) où n et m représentent le nombre d'impulsions des deux classes. On a ainsi transformé un calcul qui était quadratique en un calcul de complexité linéaire.

Si on considère le critère de Condorcet utilisé précédemment, ce critère s'écrit de la façon suivante :

$$C(X) = \sum_{i=1}^{n} \sum_{i'=1}^{n} \left( C_{ii'} X_{ii'} + \overline{C}_{ii'} \overline{X}_{ii'} \right)$$

Ce calcul est apparemment quadratique. Il peut être ramené en linéaire grâce au principe pré-établi :

$$C(X) = \sum_{i=1}^{n} \sum_{i'=1}^{n} C_{ii'} X_{ii'} + \sum_{i=1}^{n} \sum_{i'=1}^{n} \overline{C}_{ii'} \overline{X}_{ii'}$$

$$\sum_{i \in C_l, i' \in C_q} C_{ii'} = \vec{R}^l . \vec{R}^q \quad \text{et} \quad \overline{C}_{ii'} = Min\left( C_{ii}, C_{i'i'} \right) - C_{ii'}$$

il suit :

$$C(X) = \sum_l \vec{R}^l . \vec{R}^l - \sum_{l,q \neq l} \vec{R}^l . \vec{R}^q + \sum_{l,q \neq l} Min\left( \vec{R}^l . \vec{R}^l, \vec{R}^q . \vec{R}^q \right)$$

On obtient ainsi une expression calculable en O(n).

Dans la présente demande, des méthodes de traitement à complexité linéaire ont été décrites. Bien entendu, ces méthodes ne sont pas les seules à pouvoir être utilisées et le procédé de désentrelacement selon l'invention peut également être réalisé en utilisant des méthodes à complexité non linéaires.

Annexe 1

| | fréquence | groupe f | PRM principal | | PRM secondaire | |
|---|---|---|---|---|---|---|
| | | | groupe PRM | phase | | |
| imp 1 | f1 | 1 | 1 | p1 | | |
| ... | | | | | | |
| imp i | fi | 1 | 1 | pi | | |
| imp j | fj | 2 | 4 | pj | | |
| ... | | | | | | |
| ... | | | | | | |
| imp n | fn | 2 | 4 | pn | | |

Annexe 2

| Groupe RF | Effectif | moyenne | ect | Liste des impulsions du groupe | | | | | | | |
|---|---|---|---|---|---|---|---|---|---|---|---|
| G1 | | | | 1 | 2 | 18 | 21 | ........................ | | | 392 |
| G2 | | | | 186 | 201 | 209 | 312 | ......... | | 415 | NA | NA |
| . | | | | | | | | | | | |
| . | | | | | | | | | | | |
| Gn | | | | 39 | 53 | .......... | | 78 | NA | ............ | | NA |

Annexe 3

| Groupe RF | Effectif | moyenne | ect | I1 | I2 | I3 | I4 | I5 | I6 | I7 | I8 | .................... | In |
|---|---|---|---|---|---|---|---|---|---|---|---|---|---|
| G1 | | | | 1 | 0 | 1 | 0 | 0 | 0 | 1 | 0 | | 0 |
| G2 | | | | 0 | 0 | 0 | 1 | 0 | 0 | 0 | 1 | | 1 |
| . | | | | | | | | | | | | | |
| . | | | | | | | | | | | | | |
| Gn | | | | 0 | 1 | 0 | 0 | 1 | 0 | 0 | 0 | | 0 |

Impulsions enrichies

Classe 1    Classe 2    Classe 3

| Modes \ Imp. | I1 | I2 | I3 | I4 | I5 | I6 | I7 | ... | In |
|---|---|---|---|---|---|---|---|---|---|
| DOA1 | 0 | 0 | 1 | 1 | 0 | 1 | 0 | | 0 |
| DOA2 | 1 | 1 | 0 | 0 | 1 | 0 | 0 | | 0 |
| DOA 3 | 0 | 0 | 0 | 0 | 0 | 0 | 1 | | 1 |
| DOAn | ... | ... | ... | ... | ... | ... | ... | | ... |
| Fréq. 1 | 1 | 1 | 0 | 0 | 1 | 0 | 0 | | 0 |
| Fréq. 2 | 0 | 0 | 0 | 1 | 0 | 1 | 0 | | 0 |
| Fréq. 3 | 0 | 0 | 1 | 0 | 0 | 0 | 0 | | 0 |
| Fn | ... | ... | ... | ... | ... | ... | ... | | ... |
| Li1 | 0 | 0 | 0 | 0 | 0 | 0 | 1 | | 1 |
| Li2 | 1 | 1 | 0 | 0 | 1 | 0 | 0 | | 0 |
| Li3 | 0 | 0 | 0 | 1 | 0 | 1 | 0 | | 0 |
| Lin | ... | ... | ... | ... | ... | ... | ... | | ... |
| PRM1 | 0 | 0 | 1 | 1 | 0 | 1 | 0 | | 0 |
| PRM2 | 0 | 0 | 0 | 0 | 0 | 0 | 1 | | 1 |
| PRM3 | 1 | 1 | 0 | 0 | 1 | 0 | 0 | | 0 |
| PRMn | ... | ... | ... | ... | ... | ... | ... | | ... |

Modes DOA — Modes Freq — Modes Li — Modes PRM

**Tableau impulsions-modes**

DNS

| Modes \ Imp. | I3 | I4 | I6 | I1 | I2 | I5 | I7 | In |
|---|---|---|---|---|---|---|---|---|
| DOA1 | 1 | 1 | 1 | 0 | 0 | 0 | 0 | 0 |
| Fréq. 2 | 0 | 1 | 1 | 0 | 0 | 0 | 0 | 0 |
| Fréq. 3 | 1 | 0 | 0 | 0 | 0 | 0 | 0 | 0 |
| Li3 | 0 | 1 | 1 | 0 | 0 | 0 | 0 | 0 |
| PRM1 | 1 | 1 | 1 | 0 | 0 | 0 | 0 | 0 |
| DOA2 | 0 | 0 | 0 | 1 | 1 | 1 | 0 | 0 |
| Fréq.1 | 0 | 0 | 0 | 1 | 1 | 1 | 0 | 0 |
| Li2 | 0 | 0 | 0 | 1 | 1 | 1 | 0 | 0 |
| PRM3 | 0 | 0 | 0 | 1 | 1 | 1 | 0 | 0 |
| DOA3 | 0 | 0 | 0 | 0 | 0 | 0 | 1 | 1 |
| Fréq.4 | 0 | 0 | 0 | 0 | 0 | 0 | 1 | 1 |
| Li1 | 0 | 0 | 0 | 0 | 0 | 0 | 1 | 1 |
| PRM2 | 0 | 0 | 0 | 0 | 0 | 0 | 1 | 1 |
| ... | 0 | 0 | 0 | 0 | 0 | 0 | 0 | 0 |

**Tableau impulsions-modes réorganisé**

Annexe 4

| | I1 | I2 | I3 | I4 | I5 | I6 | I7 | ... | IN |
|---|---|---|---|---|---|---|---|---|---|
| AOA 1 | 0 | 0 | 1 | 1 | 0 | 1 | 0 | | 0 |
| AOA 2 | 1 | 1 | 0 | 0 | 1 | 0 | 0 | | 0 |
| ..... | | | | | | | | | |
| AOAm | 0 | 0 | 0 | 0 | 0 | 0 | 1 | | 1 |
| F1 | 1 | 1 | 0 | 0 | 1 | 0 | 0 | | 0 |
| F2 | 0 | 0 | 0 | 1 | 0 | 1 | 0 | | 0 |
| ...... | | | | | | | | | |
| Fn | 0 | 0 | 1 | 0 | 0 | 0 | 0 | | 0 |
| IP1 | 0 | 0 | 0 | 0 | 0 | 0 | 1 | | 1 |
| IP2 | 1 | 1 | 0 | 0 | 1 | 0 | 0 | | 0 |
| ..... | | | | | | | | | |
| Ipo | 0 | 0 | 0 | 1 | 0 | 1 | 0 | | 0 |
| PRM | 0 | 0 | 1 | 1 | 0 | 1 | 0 | | 0 |
| PRM | 0 | 0 | 0 | 0 | 0 | 0 | 1 | | 1 |
| ..... | | | | | | | | | |
| PRM | 1 | 1 | 0 | 0 | 1 | 0 | 0 | | 0 |

$$C_{ii'}^{j} = x_i^{j} x_{i'}^{j}$$

$$C_{ii'} = \sum_{j=1}^{P} C_{ii'}^{j}$$

$$C_{1,2} = 4$$

$$C_{3,4} = 2$$

Annexe 5a

| | I1 | I2 | I3 | I4 | I5 | I6 | I7 | ... | IN |
|---|---|---|---|---|---|---|---|---|---|
| AOA 1 | 0 | 0 | 1 | 1 | 0 | 1 | 0 | | 0 |
| AOA 2 | 1 | 1 | 0 | 0 | 1 | 0 | 0 | | 0 |
| ..... | | | | | | | | | |
| AOAm | 0 | 0 | 0 | 0 | 0 | 0 | 1 | | 1 |
| F1 | 1 | 1 | 0 | 0 | 1 | 0 | 0 | | 0 |
| F2 | 0 | 0 | 0 | 1 | 0 | 1 | 0 | | 0 |
| ...... | | | | | | | | | |
| Fn | 0 | 0 | 1 | 0 | 0 | 0 | 0 | | 0 |
| IP1 | 0 | 0 | 0 | 0 | 0 | 0 | 1 | | 1 |
| IP2 | 1 | 1 | 0 | 0 | 1 | 0 | 0 | | 0 |
| ..... | | | | | | | | | |
| Ipo | 0 | 0 | 0 | 1 | 0 | 1 | 0 | | 0 |
| PRM1 | 0 | 0 | 1 | 1 | 0 | 1 | 0 | | 0 |
| PRM2 | 0 | 0 | 0 | 0 | 0 | 0 | 1 | | 1 |
| ..... | | | | | | | | | |
| PRMp | 1 | 1 | 0 | 0 | 1 | 0 | 0 | | 0 |

$$C_i^{jj'} = x_i^j x_i^{j'}$$

$$C^{jj'} = \sum_{i=1}^{N} C_i^{jj'}$$

$$C^{AOA1,PRM1} = 3$$

$$C^{AOA2,F1} = 3$$

Annexe 5b

| | I1 | I2 | I3 | I4 | I5 | I6 | I7 | I8 | I9 | I10 | I11 | I12 | I13 | I14 | I15 | I16 | I17 | I18 | I19 | I20 |
|---|---|---|---|---|---|---|---|---|---|---|---|---|---|---|---|---|---|---|---|---|
| F1 | 1 | 1 | 0 | 0 | 0 | 0 | 0 | 0 | 0 | 0 | 0 | 0 | 0 | 0 | 0 | 0 | 0 | 0 | 0 | 0 |
| F2 | 0 | 0 | 1 | 1 | 1 | 1 | 1 | 0 | 0 | 0 | 0 | 0 | 0 | 0 | 0 | 0 | 0 | 0 | 0 | 0 |
| F3 | 0 | 0 | 0 | 0 | 0 | 0 | 0 | 1 | 1 | 0 | 0 | 0 | 0 | 0 | 0 | 0 | 1 | 1 | 1 | 1 |
| F4 | 0 | 0 | 0 | 0 | 0 | 0 | 0 | 0 | 0 | 1 | 1 | 1 | 1 | 1 | 1 | 1 | 0 | 0 | 0 | 0 |
| DOA1 | 1 | 1 | 1 | 1 | 1 | 0 | 0 | 0 | 0 | 0 | 0 | 0 | 0 | 0 | 0 | 0 | 0 | 0 | 0 | 0 |
| DOA2 | 0 | 0 | 0 | 0 | 0 | 1 | 1 | 1 | 1 | 1 | 1 | 0 | 0 | 0 | 0 | 0 | 0 | 0 | 0 | 0 |
| DOA3 | 0 | 0 | 0 | 0 | 0 | 0 | 0 | 0 | 0 | 0 | 0 | 1 | 1 | 1 | 1 | 1 | 1 | 1 | 1 | 1 |
| PRM1 | 1 | 1 | 1 | 1 | 1 | 0 | 0 | 0 | 0 | 0 | 0 | 0 | 0 | 0 | 0 | 0 | 0 | 0 | 0 | 0 |
| PRM2 | 0 | 0 | 0 | 0 | 0 | 1 | 1 | 1 | 1 | 1 | 1 | 0 | 0 | 0 | 0 | 0 | 0 | 0 | 0 | 0 |
| PRM3 | 0 | 0 | 0 | 0 | 0 | 0 | 0 | 0 | 0 | 0 | 0 | 1 | 1 | 1 | 1 | 1 | 1 | 1 | 1 | 1 |

Annexe 6a

$Cl_3$

Critère     I1 I2 I3 I4 I5   I6 I7 I8 I9 I10 I11   I12 I13 I14 I15 I16 I17 I18 I19 I20

1076

| | I1 | I2 | I3 | I4 | I5 | I6 | I7 | I8 | I9 | I10 | I11 | I12 | I13 | I14 | I15 | I16 | I17 | I18 | I19 | I20 | |
|---|---|---|---|---|---|---|---|---|---|---|---|---|---|---|---|---|---|---|---|---|---|
| mode 1 | 1 | 1 | 1 | 1 | 1 | 0 | 0 | 0 | 0 | 0 | 0 | 0 | 0 | 0 | 0 | 0 | 0 | 0 | 0 | 0 | DOA1 |
| mode 2 | 1 | 1 | 1 | 1 | 1 | 0 | 0 | 0 | 0 | 0 | 0 | 0 | 0 | 0 | 0 | 0 | 0 | 0 | 0 | 0 | PRM1 |
| mode 3 | 1 | 1 | 0 | 0 | 0 | 0 | 0 | 0 | 0 | 0 | 0 | 0 | 0 | 0 | 0 | 0 | 0 | 0 | 0 | 0 | F1 |
| mode 4 | 0 | 0 | 1 | 1 | 1 | 1 | 1 | 0 | 0 | 0 | 0 | 0 | 0 | 0 | 0 | 0 | 0 | 0 | 0 | 0 | F2 |
| mode 5 | 0 | 0 | 0 | 0 | 0 | 1 | 1 | 1 | 1 | 1 | 1 | 0 | 0 | 0 | 0 | 0 | 0 | 0 | 0 | 0 | DOA2 |
| mode 6 | 0 | 0 | 0 | 0 | 0 | 1 | 1 | 1 | 1 | 1 | 1 | 0 | 0 | 0 | 0 | 0 | 0 | 0 | 0 | 0 | PRM2 |
| mode 7 | 0 | 0 | 0 | 0 | 0 | 0 | 0 | 1 | 1 | 0 | 0 | 0 | 0 | 0 | 0 | 0 | 1 | 1 | 1 | 1 | F3 |
| mode 8 | 0 | 0 | 0 | 0 | 0 | 0 | 0 | 0 | 0 | 1 | 1 | 1 | 1 | 1 | 1 | 1 | 0 | 0 | 0 | 0 | F4 |
| mode 9 | 0 | 0 | 0 | 0 | 0 | 0 | 0 | 0 | 0 | 0 | 0 | 1 | 1 | 1 | 1 | 1 | 1 | 1 | 1 | 1 | DOA3 |
| mode 10 | 0 | 0 | 0 | 0 | 0 | 0 | 0 | 0 | 0 | 0 | 0 | 1 | 1 | 1 | 1 | 1 | 1 | 1 | 1 | 1 | PRM3 |

$Cl_2$     **Annexe 6b**     $Cl_1$

$Cl_{15}$   $Cl_{14}$

Critère

912

| | I1 | I2 | I3 | I4 | I5 | I6 | I7 | I8 | I9 | I10 | I11 | I12 | I13 | I14 | I15 | I16 | I17 | I18 | I19 | I20 | |
|---|---|---|---|---|---|---|---|---|---|---|---|---|---|---|---|---|---|---|---|---|---|
| mode 1 | 1 | 1 | 1 | 1 | 1 | 0 | 0 | 0 | 0 | 0 | 0 | 0 | 0 | 0 | 0 | 0 | 0 | 0 | 0 | 0 | DOA1 |
| mode 2 | 1 | 1 | 1 | 1 | 1 | 0 | 0 | 0 | 0 | 0 | 0 | 0 | 0 | 0 | 0 | 0 | 0 | 0 | 0 | 0 | PRM1 |
| mode 3 | 1 | 1 | 0 | 0 | 0 | 0 | 0 | 0 | 0 | 0 | 0 | 0 | 0 | 0 | 0 | 0 | 0 | 0 | 0 | 0 | F1 |
| mode 4 | 0 | 0 | 1 | 1 | 1 | 1 | 1 | 0 | 0 | 0 | 0 | 0 | 0 | 0 | 0 | 0 | 0 | 0 | 0 | 0 | F2 |
| mode 5 | 0 | 0 | 0 | 0 | 0 | 1 | 1 | 1 | 1 | 1 | 1 | 0 | 0 | 0 | 0 | 0 | 0 | 0 | 0 | 0 | DOA2 |
| mode 6 | 0 | 0 | 0 | 0 | 0 | 1 | 1 | 1 | 1 | 1 | 1 | 0 | 0 | 0 | 0 | 0 | 0 | 0 | 0 | 0 | PRM2 |
| mode 7 | 0 | 0 | 0 | 0 | 0 | 0 | 0 | 1 | 1 | 0 | 0 | 0 | 0 | 0 | 0 | 0 | 1 | 1 | 1 | 1 | F3 |
| mode 8 | 0 | 0 | 0 | 0 | 0 | 0 | 0 | 0 | 0 | 1 | 1 | 1 | 1 | 1 | 1 | 1 | 0 | 0 | 0 | 0 | F4 |
| mode 9 | 0 | 0 | 0 | 0 | 0 | 0 | 0 | 0 | 0 | 0 | 0 | 1 | 1 | 1 | 1 | 1 | 1 | 1 | 1 | 1 | DOA3 |
| mode 10 | 0 | 0 | 0 | 0 | 0 | 0 | 0 | 0 | 0 | 0 | 0 | 1 | 1 | 1 | 1 | 1 | 1 | 1 | 1 | 1 | PRM3 |

$Cl_{13}$     **Annexe 6c**     $Cl_{12}$    $cl_{11}$

| | I1 | I2 | I3 | I4 | I5 | I6 | I7 | I8 | I9 | I10 | I11 | I12 | I13 | I14 | I15 | I16 | I17 | I18 | I19 | I20 | |
|---|---|---|---|---|---|---|---|---|---|---|---|---|---|---|---|---|---|---|---|---|---|
| Mode 1 | 1 | 1 | 1 | 1 | 1 | 0 | 0 | 0 | 0 | 0 | 0 | 0 | 0 | 0 | 0 | 0 | 0 | 0 | 0 | 0 | DOA1 |
| Mode 2 | 1 | 1 | 1 | 1 | 1 | 0 | 0 | 0 | 0 | 0 | 0 | 0 | 0 | 0 | 0 | 0 | 0 | 0 | 0 | 0 | PRM1 |
| Mode 3 | 1 | 1 | 0 | 0 | 0 | 0 | 0 | 0 | 0 | 0 | 0 | 0 | 0 | 0 | 0 | 0 | 0 | 0 | 0 | 0 | F1 |
| Mode 4 | 0 | 0 | 1 | 1 | 1 | 1 | 1 | 0 | 0 | 0 | 0 | 0 | 0 | 0 | 0 | 0 | 0 | 0 | 0 | 0 | F2 |
| Mode 5 | 0 | 0 | 0 | 0 | 0 | 1 | 1 | 1 | 1 | 1 | 1 | 0 | 0 | 0 | 0 | 0 | 0 | 0 | 0 | 0 | DOA2 |
| Mode 6 | 0 | 0 | 0 | 0 | 0 | 1 | 1 | 1 | 1 | 1 | 1 | 0 | 0 | 0 | 0 | 0 | 0 | 0 | 0 | 0 | PRM2 |
| Mode 7 | 0 | 0 | 0 | 0 | 0 | 0 | 0 | 1 | 1 | 0 | 0 | 0 | 0 | 0 | 0 | 0 | 1 | 1 | 1 | 1 | F3 |
| Mode 8 | 0 | 0 | 0 | 0 | 0 | 0 | 0 | 0 | 0 | 1 | 1 | 1 | 1 | 1 | 1 | 1 | 0 | 0 | 0 | 0 | F4 |
| Mode 9 | 0 | 0 | 0 | 0 | 0 | 0 | 0 | 0 | 0 | 0 | 0 | 1 | 1 | 1 | 1 | 1 | 1 | 1 | 1 | 1 | DOA3 |
| Mode 10 | 0 | 0 | 0 | 0 | 0 | 0 | 0 | 0 | 0 | 0 | 0 | 1 | 1 | 1 | 1 | 1 | 1 | 1 | 1 | 1 | PRM3 |

Annexe 7

| Critere | | | I1 | I2 | I3 | I4 | I5 | I6 | I7 | I8 | I9 | I10 | I11 | I12 | I13 | I14 | I15 | I16 | I17 | I18 | I19 | I20 | |
|---|---|---|---|---|---|---|---|---|---|---|---|---|---|---|---|---|---|---|---|---|---|---|---|
| | 203 | mode 1 | 1 | 1 | 1 | 1 | 1 | 0 | 0 | 0 | 0 | 0 | 0 | 0 | 0 | 0 | 0 | 0 | 0 | 0 | 0 | 0 | DOA1 |
| | | mode 2 | 1 | 1 | 1 | 1 | 1 | 0 | 0 | 0 | 0 | 0 | 0 | 0 | 0 | 0 | 0 | 0 | 0 | 0 | 0 | 0 | PRM1 |
| | | mode 3 | 1 | 1 | 0 | 0 | 0 | 0 | 0 | 0 | 0 | 0 | 0 | 0 | 0 | 0 | 0 | 0 | 0 | 0 | 0 | 0 | F1 |
| | | mode 4 | 0 | 0 | 1 | 1 | 1 | 1 | 1 | 0 | 0 | 0 | 0 | 0 | 0 | 0 | 0 | 0 | 0 | 0 | 0 | 0 | F2 |
| | | mode 5 | 0 | 0 | 0 | 0 | 0 | 1 | 1 | 1 | 1 | 1 | 1 | 0 | 0 | 0 | 0 | 0 | 0 | 0 | 0 | 0 | DOA2 |
| | | mode 6 | 0 | 0 | 0 | 0 | 0 | 1 | 1 | 1 | 1 | 1 | 1 | 0 | 0 | 0 | 0 | 0 | 0 | 0 | 0 | 0 | PRM2 |
| | | mode 7 | 0 | 0 | 0 | 0 | 0 | 0 | 0 | 1 | 1 | 0 | 0 | 0 | 0 | 0 | 0 | 0 | 1 | 1 | 1 | 1 | F3 |
| | | mode 8 | 0 | 0 | 0 | 0 | 0 | 0 | 0 | 0 | 0 | 1 | 1 | 1 | 1 | 1 | 1 | 1 | 0 | 0 | 0 | 0 | F4 |
| | | mode 9 | 0 | 0 | 0 | 0 | 0 | 0 | 0 | 0 | 0 | 0 | 0 | 1 | 1 | 1 | 1 | 1 | 1 | 1 | 1 | 1 | DOA3 |
| | | mode 10 | 0 | 0 | 0 | 0 | 0 | 0 | 0 | 0 | 0 | 0 | 0 | 1 | 1 | 1 | 1 | 1 | 1 | 1 | 1 | 1 | PRM3 |

Annexe 8

Critère

303

$$C_{1'} = C_1$$

$$F_{4'} = F_4 - C_1$$

| | I10 | I11 | I12 | I13 | I14 | I15 | I16 | I17 | I18 | I19 | I20 | |
|---|---|---|---|---|---|---|---|---|---|---|---|---|
| mode 1 | 0 | 0 | 0 | 0 | 0 | 0 | 0 | 0 | 0 | 0 | 0 | DOA1 |
| mode 2 | 0 | 0 | 0 | 0 | 0 | 0 | 0 | 0 | 0 | 0 | 0 | PRM1 |
| mode 3 | 0 | 0 | 0 | 0 | 0 | 0 | 0 | 0 | 0 | 0 | 0 | F1 |
| mode 4 | 0 | 0 | 0 | 0 | 0 | 0 | 0 | 0 | 0 | 0 | 0 | F2 |
| mode 5 | 1 | 1 | 0 | 0 | 0 | 0 | 0 | 0 | 0 | 0 | 0 | DOA2 |
| mode 6 | 1 | 1 | 0 | 0 | 0 | 0 | 0 | 0 | 0 | 0 | 0 | PRM2 |
| mode 7 | 0 | 0 | 0 | 0 | 0 | 0 | 0 | 1 | 1 | 1 | 1 | F3 |
| mode 8 | 1 | 1 | 1 | 1 | 1 | 1 | 1 | 0 | 0 | 0 | 0 | F4 |
| mode 9 | 0 | 0 | 1 | 1 | 1 | 1 | 1 | 1 | 1 | 1 | 1 | DOA3 |
| mode 10 | 0 | 0 | 1 | 1 | 1 | 1 | 1 | 1 | 1 | 1 | 1 | PRM3 |

Critère

263

$$C_{1'} = C_1 - F_4$$

$$F_{4'} = F_4 - C_1$$

$$C_{2'} = C_1 \cap F_4$$

| | I10 | I11 | I12 | I13 | I14 | I15 | I16 | I17 | I18 | I19 | I20 | |
|---|---|---|---|---|---|---|---|---|---|---|---|---|
| mode 1 | 0 | 0 | 0 | 0 | 0 | 0 | 0 | 0 | 0 | 0 | 0 | DOA1 |
| mode 2 | 0 | 0 | 0 | 0 | 0 | 0 | 0 | 0 | 0 | 0 | 0 | PRM1 |
| mode 3 | 0 | 0 | 0 | 0 | 0 | 0 | 0 | 0 | 0 | 0 | 0 | F1 |
| mode 4 | 0 | 0 | 0 | 0 | 0 | 0 | 0 | 0 | 0 | 0 | 0 | F2 |
| mode 5 | 1 | 1 | 0 | 0 | 0 | 0 | 0 | 0 | 0 | 0 | 0 | DOA2 |
| mode 6 | 1 | 1 | 0 | 0 | 0 | 0 | 0 | 0 | 0 | 0 | 0 | PRM2 |
| mode 7 | 0 | 0 | 0 | 0 | 0 | 0 | 0 | 1 | 1 | 1 | 1 | F3 |
| mode 8 | 1 | 1 | 1 | 1 | 1 | 1 | 1 | 0 | 0 | 0 | 0 | F4 |
| mode 9 | 0 | 0 | 1 | 1 | 1 | 1 | 1 | 1 | 1 | 1 | 1 | DOA3 |
| mode 10 | 0 | 0 | 1 | 1 | 1 | 1 | 1 | 1 | 1 | 1 | 1 | PRM3 |

Critère

243

$$C_{1'} = C_1 - F_4$$

$$F_{4'} = F_4$$

| | I10 | I11 | I12 | I13 | I14 | I15 | I16 | I17 | I18 | I19 | I20 | |
|---|---|---|---|---|---|---|---|---|---|---|---|---|
| mode 1 | 0 | 0 | 0 | 0 | 0 | 0 | 0 | 0 | 0 | 0 | 0 | DOA1 |
| mode 2 | 0 | 0 | 0 | 0 | 0 | 0 | 0 | 0 | 0 | 0 | 0 | PRM1 |
| mode 3 | 0 | 0 | 0 | 0 | 0 | 0 | 0 | 0 | 0 | 0 | 0 | F1 |
| mode 4 | 0 | 0 | 0 | 0 | 0 | 0 | 0 | 0 | 0 | 0 | 0 | F2 |
| mode 5 | 1 | 1 | 0 | 0 | 0 | 0 | 0 | 0 | 0 | 0 | 0 | DOA2 |
| mode 6 | 1 | 1 | 0 | 0 | 0 | 0 | 0 | 0 | 0 | 0 | 0 | PRM2 |
| mode 7 | 0 | 0 | 0 | 0 | 0 | 0 | 0 | 1 | 1 | 1 | 1 | F3 |
| mode 8 | 1 | 1 | 1 | 1 | 1 | 1 | 1 | 0 | 0 | 0 | 0 | F4 |
| mode 9 | 0 | 0 | 1 | 1 | 1 | 1 | 1 | 1 | 1 | 1 | 1 | DOA3 |
| mode 10 | 0 | 0 | 1 | 1 | 1 | 1 | 1 | 1 | 1 | 1 | 1 | PRM3 |

Critère

235

$$C_{1'} = C_1 \cup F_4$$

| | I10 | I11 | I12 | I13 | I14 | I15 | I16 | I17 | I18 | I19 | I20 | |
|---|---|---|---|---|---|---|---|---|---|---|---|---|
| mode 1 | 0 | 0 | 0 | 0 | 0 | 0 | 0 | 0 | 0 | 0 | 0 | DOA1 |
| mode 2 | 0 | 0 | 0 | 0 | 0 | 0 | 0 | 0 | 0 | 0 | 0 | PRM1 |
| mode 3 | 0 | 0 | 0 | 0 | 0 | 0 | 0 | 0 | 0 | 0 | 0 | F1 |
| mode 4 | 0 | 0 | 0 | 0 | 0 | 0 | 0 | 0 | 0 | 0 | 0 | F2 |
| mode 5 | 1 | 1 | 0 | 0 | 0 | 0 | 0 | 0 | 0 | 0 | 0 | DOA2 |
| mode 6 | 1 | 1 | 0 | 0 | 0 | 0 | 0 | 0 | 0 | 0 | 0 | PRM2 |
| mode 7 | 0 | 0 | 0 | 0 | 0 | 0 | 0 | 1 | 1 | 1 | 1 | F3 |
| mode 8 | 1 | 1 | 1 | 1 | 1 | 1 | 1 | 0 | 0 | 0 | 0 | F4 |
| mode 9 | 0 | 0 | 1 | 1 | 1 | 1 | 1 | 1 | 1 | 1 | 1 | DOA3 |
| mode 10 | 0 | 0 | 1 | 1 | 1 | 1 | 1 | 1 | 1 | 1 | 1 | PRM3 |

Annexe 9

**Critère** (307)

$$C_{1'} = C_1$$

$$F_{3'} = F_3 - C_1$$

| | I8 | I9 | I12 | I13 | I14 | I15 | I16 | I17 | I18 | I19 | I20 | |
|---|---|---|---|---|---|---|---|---|---|---|---|---|
| mode 1 | 0 | 0 | 0 | 0 | 0 | 0 | 0 | 0 | 0 | 0 | 0 | DOA1 |
| mode 2 | 0 | 0 | 0 | 0 | 0 | 0 | 0 | 0 | 0 | 0 | 0 | PRM1 |
| mode 3 | 0 | 0 | 0 | 0 | 0 | 0 | 0 | 0 | 0 | 0 | 0 | F1 |
| mode 4 | 0 | 0 | 0 | 0 | 0 | 0 | 0 | 0 | 0 | 0 | 0 | F2 |
| mode 5 | 1 | 1 | 0 | 0 | 0 | 0 | 0 | 0 | 0 | 0 | 0 | DOA2 |
| mode 6 | 1 | 1 | 0 | 0 | 0 | 0 | 0 | 0 | 0 | 0 | 0 | PRM2 |
| mode 7 | 1 | 1 | 0 | 0 | 0 | 0 | 0 | 1 | 1 | 1 | 1 | F3 |
| mode 8 | 0 | 0 | 1 | 1 | 1 | 1 | 1 | 0 | 0 | 0 | 0 | F4 |
| mode 9 | 0 | 0 | 1 | 1 | 1 | 1 | 1 | 1 | 1 | 1 | 1 | DOA3 |
| mode 10 | 0 | 0 | 1 | 1 | 1 | 1 | 1 | 1 | 1 | 1 | 1 | PRM3 |

**Critère** 251

$$C_{1'} = C_1 - F_3$$

$$F_{3'} = F_3$$

| | I8 | I9 | I12 | I13 | I14 | I15 | I16 | I17 | I18 | I19 | I20 | |
|---|---|---|---|---|---|---|---|---|---|---|---|---|
| mode 1 | 0 | 0 | 0 | 0 | 0 | 0 | 0 | 0 | 0 | 0 | 0 | DOA1 |
| mode 2 | 0 | 0 | 0 | 0 | 0 | 0 | 0 | 0 | 0 | 0 | 0 | PRM1 |
| mode 3 | 0 | 0 | 0 | 0 | 0 | 0 | 0 | 0 | 0 | 0 | 0 | F1 |
| mode 4 | 0 | 0 | 0 | 0 | 0 | 0 | 0 | 0 | 0 | 0 | 0 | F2 |
| mode 5 | 1 | 1 | 0 | 0 | 0 | 0 | 0 | 0 | 0 | 0 | 0 | DOA2 |
| mode 6 | 1 | 1 | 0 | 0 | 0 | 0 | 0 | 0 | 0 | 0 | 0 | PRM2 |
| mode 7 | 1 | 1 | 0 | 0 | 0 | 0 | 0 | 1 | 1 | 1 | 1 | F3 |
| mode 8 | 0 | 0 | 1 | 1 | 1 | 1 | 1 | 0 | 0 | 0 | 0 | F4 |
| mode 9 | 0 | 0 | 1 | 1 | 1 | 1 | 1 | 1 | 1 | 1 | 1 | DOA3 |
| mode 10 | 0 | 0 | 1 | 1 | 1 | 1 | 1 | 1 | 1 | 1 | 1 | PRM3 |

**Critère** 267

$$C_{1'} = C_1 - F_3$$

$$F_{3'} = F_3 - C_1$$

$$C_{2'} = C_1 \cap F_3$$

| | I8 | I9 | I12 | I13 | I14 | I15 | I16 | I17 | I18 | I19 | I20 | |
|---|---|---|---|---|---|---|---|---|---|---|---|---|
| mode 1 | 0 | 0 | 0 | 0 | 0 | 0 | 0 | 0 | 0 | 0 | 0 | DOA1 |
| mode 2 | 0 | 0 | 0 | 0 | 0 | 0 | 0 | 0 | 0 | 0 | 0 | PRM1 |
| mode 3 | 0 | 0 | 0 | 0 | 0 | 0 | 0 | 0 | 0 | 0 | 0 | F1 |
| mode 4 | 0 | 0 | 0 | 0 | 0 | 0 | 0 | 0 | 0 | 0 | 0 | F2 |
| mode 5 | 1 | 1 | 0 | 0 | 0 | 0 | 0 | 0 | 0 | 0 | 0 | DOA2 |
| mode 6 | 1 | 1 | 0 | 0 | 0 | 0 | 0 | 0 | 0 | 0 | 0 | PRM2 |
| mode 7 | 1 | 1 | 0 | 0 | 0 | 0 | 0 | 1 | 1 | 1 | 1 | F3 |
| mode 8 | 0 | 0 | 1 | 1 | 1 | 1 | 1 | 0 | 0 | 0 | 0 | F4 |
| mode 9 | 0 | 0 | 1 | 1 | 1 | 1 | 1 | 1 | 1 | 1 | 1 | DOA3 |
| mode 10 | 0 | 0 | 1 | 1 | 1 | 1 | 1 | 1 | 1 | 1 | 1 | PRM3 |

**Critère** 231

$$C_{1'} = C_1 \cup F_3$$

| | I8 | I9 | I12 | I13 | I14 | I15 | I16 | I17 | I18 | I19 | I20 | |
|---|---|---|---|---|---|---|---|---|---|---|---|---|
| mode 1 | 0 | 0 | 0 | 0 | 0 | 0 | 0 | 0 | 0 | 0 | 0 | DOA1 |
| mode 2 | 0 | 0 | 0 | 0 | 0 | 0 | 0 | 0 | 0 | 0 | 0 | PRM1 |
| mode 3 | 0 | 0 | 0 | 0 | 0 | 0 | 0 | 0 | 0 | 0 | 0 | F1 |
| mode 4 | 0 | 0 | 0 | 0 | 0 | 0 | 0 | 0 | 0 | 0 | 0 | F2 |
| mode 5 | 1 | 1 | 0 | 0 | 0 | 0 | 0 | 0 | 0 | 0 | 0 | DOA2 |
| mode 6 | 1 | 1 | 0 | 0 | 0 | 0 | 0 | 0 | 0 | 0 | 0 | PRM2 |
| mode 7 | 1 | 1 | 0 | 0 | 0 | 0 | 0 | 1 | 1 | 1 | 1 | F3 |
| mode 8 | 0 | 0 | 1 | 1 | 1 | 1 | 1 | 0 | 0 | 0 | 0 | F4 |
| mode 9 | 0 | 0 | 1 | 1 | 1 | 1 | 1 | 1 | 1 | 1 | 1 | DOA3 |
| mode 10 | 0 | 0 | 1 | 1 | 1 | 1 | 1 | 1 | 1 | 1 | 1 | PRM3 |

Annexe 10a

| Critère | | I8 | I9 | I10 | I11 | I12 | I13 | I14 | I15 | I16 | I17 | I18 | I19 | I20 | |
|---|---|---|---|---|---|---|---|---|---|---|---|---|---|---|---|
| | mode 1 | 0 | 0 | 0 | 0 | 0 | 0 | 0 | 0 | 0 | 0 | 0 | 0 | 0 | DOA1 |
| | mode 2 | 0 | 0 | 0 | 0 | 0 | 0 | 0 | 0 | 0 | 0 | 0 | 0 | 0 | PRM1 |
| | mode 3 | 0 | 0 | 0 | 0 | 0 | 0 | 0 | 0 | 0 | 0 | 0 | 0 | 0 | F1 |
| | mode 4 | 0 | 0 | 0 | 0 | 0 | 0 | 0 | 0 | 0 | 0 | 0 | 0 | 0 | F2 |
| | mode 5 | 1 | 1 | 1 | 1 | 0 | 0 | 0 | 0 | 0 | 0 | 0 | 0 | 0 | DOA2 |
| | mode 6 | 1 | 1 | 1 | 1 | 0 | 0 | 0 | 0 | 0 | 0 | 0 | 0 | 0 | PRM2 |
| | mode 7 | 1 | 1 | 0 | 0 | 0 | 0 | 0 | 0 | 0 | 1 | 1 | 1 | 1 | F3 |
| | mode 8 | 0 | 0 | 1 | 1 | 1 | 1 | 1 | 1 | 1 | 0 | 0 | 0 | 0 | F4 |
| | mode 9 | 0 | 0 | 0 | 0 | 1 | 1 | 1 | 1 | 1 | 1 | 1 | 1 | 1 | DOA3 |
| | mode 10 | 0 | 0 | 0 | 0 | 1 | 1 | 1 | 1 | 1 | 1 | 1 | 1 | 1 | PRM3 |

$$C_3 = \{I_8, I_9\} \quad C_2 = \{I_{10}, I_{11}\} \quad C_1 = \{I_{12}, I_{13}, I_{14}, I_{15}, I_{16}, I_{17}, I_{18}, I_{19}, I_{20}\}$$

Annexe 10b

| Critère | | | I8 | I9 | I12 | I13 | I14 | I15 | I16 | I17 | I18 | I19 | I20 | |
|---|---|---|---|---|---|---|---|---|---|---|---|---|---|---|
| | 307 | mode 1 | 0 | 0 | 0 | 0 | 0 | 0 | 0 | 0 | 0 | 0 | 0 | DOA1 |
| | | mode 2 | 0 | 0 | 0 | 0 | 0 | 0 | 0 | 0 | 0 | 0 | 0 | PRM1 |
| | | mode 3 | 0 | 0 | 0 | 0 | 0 | 0 | 0 | 0 | 0 | 0 | 0 | F1 |
| | | mode 4 | 0 | 0 | 0 | 0 | 0 | 0 | 0 | 0 | 0 | 0 | 0 | F2 |
| | | mode 5 | 1 | 1 | 0 | 0 | 0 | 0 | 0 | 0 | 0 | 0 | 0 | DOA2 |
| | | mode 6 | 1 | 1 | 0 | 0 | 0 | 0 | 0 | 0 | 0 | 0 | 0 | PRM2 |
| | | mode 7 | 1 | 1 | 0 | 0 | 0 | 0 | 0 | 1 | 1 | 1 | 1 | F3 |
| | | mode 8 | 0 | 0 | 1 | 1 | 1 | 1 | 1 | 0 | 0 | 0 | 0 | F4 |
| | | mode 9 | 0 | 0 | 1 | 1 | 1 | 1 | 1 | 1 | 1 | 1 | 1 | DOA3 |
| | | mode 10 | 0 | 0 | 1 | 1 | 1 | 1 | 1 | 1 | 1 | 1 | 1 | PRM3 |

Annexe 11

Critère 84

| | I6 | I7 | I8 | I9 | I10 | I11 | |
|---|---|---|---|---|---|---|---|
| mode 1 | 0 | 0 | 0 | 0 | 0 | 0 | DOA1 |
| mode 2 | 0 | 0 | 0 | 0 | 0 | 0 | PRM1 |
| mode 3 | 0 | 0 | 0 | 0 | 0 | 0 | F1 |
| mode 4 | 1 | 1 | 0 | 0 | 0 | 0 | F2 |
| mode 5 | 1 | 1 | 1 | 1 | 1 | 1 | DOA2 |
| mode 6 | 1 | 1 | 1 | 1 | 1 | 1 | PRM2 |
| mode 7 | 0 | 0 | 1 | 1 | 0 | 0 | F3 |
| mode 8 | 0 | 0 | 0 | 0 | 1 | 1 | F4 |
| mode 9 | 0 | 0 | 0 | 0 | 0 | 0 | DOA3 |
| mode 10 | 0 | 0 | 0 | 0 | 0 | 0 | PRM3 |

Critère 68

| | I6 | I7 | I8 | I9 | I10 | I11 | |
|---|---|---|---|---|---|---|---|
| mode 1 | 0 | 0 | 0 | 0 | 0 | 0 | DOA1 |
| mode 2 | 0 | 0 | 0 | 0 | 0 | 0 | PRM1 |
| mode 3 | 0 | 0 | 0 | 0 | 0 | 0 | F1 |
| mode 4 | 1 | 1 | 0 | 0 | 0 | 0 | F2 |
| mode 5 | 1 | 1 | 1 | 1 | 1 | 1 | DOA2 |
| mode 6 | 1 | 1 | 1 | 1 | 1 | 1 | PRM2 |
| mode 7 | 0 | 0 | 1 | 1 | 0 | 0 | F3 |
| mode 8 | 0 | 0 | 0 | 0 | 1 | 1 | F4 |
| mode 9 | 0 | 0 | 0 | 0 | 0 | 0 | DOA3 |
| mode 10 | 0 | 0 | 0 | 0 | 0 | 0 | PRM3 |

Critère 84

| | I6 | I7 | I8 | I9 | I10 | I11 | |
|---|---|---|---|---|---|---|---|
| mode 1 | 0 | 0 | 0 | 0 | 0 | 0 | DOA1 |
| mode 2 | 0 | 0 | 0 | 0 | 0 | 0 | PRM1 |
| mode 3 | 0 | 0 | 0 | 0 | 0 | 0 | F1 |
| mode 4 | 1 | 1 | 0 | 0 | 0 | 0 | F2 |
| mode 5 | 1 | 1 | 1 | 1 | 1 | 1 | DOA2 |
| mode 6 | 1 | 1 | 1 | 1 | 1 | 1 | PRM2 |
| mode 7 | 0 | 0 | 1 | 1 | 0 | 0 | F3 |
| mode 8 | 0 | 0 | 0 | 0 | 1 | 1 | F4 |
| mode 9 | 0 | 0 | 0 | 0 | 0 | 0 | DOA3 |
| mode 10 | 0 | 0 | 0 | 0 | 0 | 0 | PRM3 |

Critère 68

| | I6 | I7 | I8 | I9 | I10 | I11 | |
|---|---|---|---|---|---|---|---|
| mode 1 | 0 | 0 | 0 | 0 | 0 | 0 | DOA1 |
| mode 2 | 0 | 0 | 0 | 0 | 0 | 0 | PRM1 |
| mode 3 | 0 | 0 | 0 | 0 | 0 | 0 | F1 |
| mode 4 | 1 | 1 | 0 | 0 | 0 | 0 | F2 |
| mode 5 | 1 | 1 | 1 | 1 | 1 | 1 | DOA2 |
| mode 6 | 1 | 1 | 1 | 1 | 1 | 1 | PRM2 |
| mode 7 | 0 | 0 | 1 | 1 | 0 | 0 | F3 |
| mode 8 | 0 | 0 | 0 | 0 | 1 | 1 | F4 |
| mode 9 | 0 | 0 | 0 | 0 | 0 | 0 | DOA3 |
| mode 10 | 0 | 0 | 0 | 0 | 0 | 0 | PRM3 |

Annexe 12a

| | I6 | I7 | I8 | I9 | I10 | I11 | I12 | I13 | I14 | I15 | I16 | I17 | I18 | I19 | I20 | |
|---|---|---|---|---|---|---|---|---|---|---|---|---|---|---|---|---|
| mode 1 | 0 | 0 | 0 | 0 | 0 | 0 | 0 | 0 | 0 | 0 | 0 | 0 | 0 | 0 | 0 | DOA1 |
| mode 2 | 0 | 0 | 0 | 0 | 0 | 0 | 0 | 0 | 0 | 0 | 0 | 0 | 0 | 0 | 0 | PRM1 |
| mode 3 | 0 | 0 | 0 | 0 | 0 | 0 | 0 | 0 | 0 | 0 | 0 | 0 | 0 | 0 | 0 | F1 |
| mode 4 | 1 | 1 | 0 | 0 | 0 | 0 | 0 | 0 | 0 | 0 | 0 | 0 | 0 | 0 | 0 | F2 |
| mode 5 | 1 | 1 | 1 | 1 | 1 | 1 | 0 | 0 | 0 | 0 | 0 | 0 | 0 | 0 | 0 | DOA2 |
| mode 6 | 1 | 1 | 1 | 1 | 1 | 1 | 0 | 0 | 0 | 0 | 0 | 0 | 0 | 0 | 0 | PRM2 |
| mode 7 | 0 | 0 | 1 | 1 | 0 | 0 | 0 | 0 | 0 | 0 | 0 | 1 | 1 | 1 | 1 | F3 |
| mode 8 | 0 | 0 | 0 | 0 | 1 | 1 | 1 | 1 | 1 | 1 | 1 | 0 | 0 | 0 | 0 | F4 |
| mode 9 | 0 | 0 | 0 | 0 | 0 | 0 | 1 | 1 | 1 | 1 | 1 | 1 | 1 | 1 | 1 | DOA3 |
| mode 10 | 0 | 0 | 0 | 0 | 0 | 0 | 1 | 1 | 1 | 1 | 1 | 1 | 1 | 1 | 1 | PRM3 |

$$C_2 = \{I_8, I_9, I_{10}, I_{11}\} \qquad C_1 = \{I_{12}, I_{13}, I_{14}, I_{15}, I_{16}, I_{17}, I_{18}, I_{19}, I_{20}\}$$

Annexe 12b

Critère 207

$$C_{2'} = C_2$$

$$F_2 = F_2 - C_2$$

| | I3 | I4 | I5 | I6 | I7 | 8 | I9 | I10 | I11 | |
|---|---|---|---|---|---|---|---|---|---|---|
| mode 1 | 1 | 1 | 1 | 0 | 0 | 0 | 0 | 0 | 0 | DOA1 |
| mode 2 | 1 | 1 | 1 | 0 | 0 | 0 | 0 | 0 | 0 | PRM1 |
| mode 3 | 0 | 0 | 0 | 0 | 0 | 0 | 0 | 0 | 0 | F1 |
| mode 4 | 1 | 1 | 1 | 1 | 1 | 0 | 0 | 0 | 0 | F2 |
| mode 5 | 0 | 0 | 0 | 1 | 1 | 1 | 1 | 1 | 1 | DOA2 |
| mode 6 | 0 | 0 | 0 | 1 | 1 | 1 | 1 | 1 | 1 | PRM2 |
| mode 7 | 0 | 0 | 0 | 0 | 0 | 1 | 1 | 0 | 0 | F3 |
| mode 8 | 0 | 0 | 0 | 0 | 0 | 0 | 0 | 1 | 1 | F4 |
| mode 9 | 0 | 0 | 0 | 0 | 0 | 0 | 0 | 0 | 0 | DOA3 |
| mode 10 | 0 | 0 | 0 | 0 | 0 | 0 | 0 | 0 | 0 | PRM3 |

Critère 179

$$C_{2'} = C_2 - F_2$$

$$F_{2'} = F_2$$

| | I3 | I4 | I5 | I6 | I7 | I8 | I9 | I10 | I11 | |
|---|---|---|---|---|---|---|---|---|---|---|
| mode 1 | 1 | 1 | 1 | 0 | 0 | 0 | 0 | 0 | 0 | DOA1 |
| mode 2 | 1 | 1 | 1 | 0 | 0 | 0 | 0 | 0 | 0 | PRM1 |
| mode 3 | 0 | 0 | 0 | 0 | 0 | 0 | 0 | 0 | 0 | F1 |
| mode 4 | 1 | 1 | 1 | 1 | 1 | 0 | 0 | 0 | 0 | F2 |
| mode 5 | 0 | 0 | 0 | 1 | 1 | 1 | 1 | 1 | 1 | DOA2 |
| mode 6 | 0 | 0 | 0 | 1 | 1 | 1 | 1 | 1 | 1 | PRM2 |
| mode 7 | 0 | 0 | 0 | 0 | 0 | 1 | 1 | 0 | 0 | F3 |
| mode 8 | 0 | 0 | 0 | 0 | 0 | 0 | 0 | 1 | 1 | F4 |
| mode 9 | 0 | 0 | 0 | 0 | 0 | 0 | 0 | 0 | 0 | DOA3 |
| mode 10 | 0 | 0 | 0 | 0 | 0 | 0 | 0 | 0 | 0 | PRM3 |

Critère 123

$$C_{2'} = C_2 \cup F_2$$

| | I3 | I4 | I5 | I6 | I7 | I8 | I9 | I10 | I11 | |
|---|---|---|---|---|---|---|---|---|---|---|
| mode 1 | 1 | 1 | 1 | 0 | 0 | 0 | 0 | 0 | 0 | DOA1 |
| mode 2 | 1 | 1 | 1 | 0 | 0 | 0 | 0 | 0 | 0 | PRM1 |
| mode 3 | 0 | 0 | 0 | 0 | 0 | 0 | 0 | 0 | 0 | F1 |
| mode 4 | 1 | 1 | 1 | 1 | 1 | 0 | 0 | 0 | 0 | F2 |
| mode 5 | 0 | 0 | 0 | 1 | 1 | 1 | 1 | 1 | 1 | DOA2 |
| mode 6 | 0 | 0 | 0 | 1 | 1 | 1 | 1 | 1 | 1 | PRM2 |
| mode 7 | 0 | 0 | 0 | 0 | 0 | 1 | 1 | 0 | 0 | F3 |
| mode 8 | 0 | 0 | 0 | 0 | 0 | 0 | 0 | 1 | 1 | F4 |
| mode 9 | 0 | 0 | 0 | 0 | 0 | 0 | 0 | 0 | 0 | DOA3 |
| mode 10 | 0 | 0 | 0 | 0 | 0 | 0 | 0 | 0 | 0 | PRM3 |

Critère 191

$$C_{2'} = C_2 - F_2$$

$$C_{2'} = C_2 \cap F_2$$

$$F_{2'} = F_2 - C_2$$

| | I3 | I4 | I5 | I6 | I7 | I8 | I9 | I10 | I11 | |
|---|---|---|---|---|---|---|---|---|---|---|
| mode 1 | 1 | 1 | 1 | 0 | 0 | 0 | 0 | 0 | 0 | DOA1 |
| mode 2 | 1 | 1 | 1 | 0 | 0 | 0 | 0 | 0 | 0 | PRM1 |
| mode 3 | 0 | 0 | 0 | 0 | 0 | 0 | 0 | 0 | 0 | F1 |
| mode 4 | 1 | 1 | 1 | 1 | 1 | 0 | 0 | 0 | 0 | F2 |
| mode 5 | 0 | 0 | 0 | 1 | 1 | 1 | 1 | 1 | 1 | DOA2 |
| mode 6 | 0 | 0 | 0 | 1 | 1 | 1 | 1 | 1 | 1 | PRM2 |
| mode 7 | 0 | 0 | 0 | 0 | 0 | 1 | 1 | 0 | 0 | F3 |
| mode 8 | 0 | 0 | 0 | 0 | 0 | 0 | 0 | 1 | 1 | F4 |
| mode 9 | 0 | 0 | 0 | 0 | 0 | 0 | 0 | 0 | 0 | DOA3 |
| mode 10 | 0 | 0 | 0 | 0 | 0 | 0 | 0 | 0 | 0 | PRM3 |

Annexe 13

Critère 63

| | I1 | I2 | I3 | I4 | I5 | |
|---|---|---|---|---|---|---|
| mode 1 | 1 | 1 | 1 | 1 | 1 | DOA1 |
| mode 2 | 1 | 1 | 1 | 1 | 1 | PRM1 |
| mode 3 | 1 | 1 | 0 | 0 | 0 | F1 |
| mode 4 | 0 | 0 | 1 | 1 | 1 | F2 |
| mode 5 | 0 | 0 | 0 | 0 | 0 | DOA2 |
| mode 6 | 0 | 0 | 0 | 0 | 0 | PRM2 |
| mode 7 | 0 | 0 | 0 | 0 | 0 | F3 |
| mode 8 | 0 | 0 | 0 | 0 | 0 | F4 |
| mode 9 | 0 | 0 | 0 | 0 | 0 | DOA3 |
| mode 10 | 0 | 0 | 0 | 0 | 0 | PRM3 |

Critère 51

| | I1 | I2 | I3 | I4 | I5 | |
|---|---|---|---|---|---|---|
| mode 1 | 1 | 1 | 1 | 1 | 1 | DOA1 |
| mode 2 | 1 | 1 | 1 | 1 | 1 | PRM1 |
| mode 3 | 1 | 1 | 0 | 0 | 0 | F1 |
| mode 4 | 0 | 0 | 1 | 1 | 1 | F2 |
| mode 5 | 0 | 0 | 0 | 0 | 0 | DOA2 |
| mode 6 | 0 | 0 | 0 | 0 | 0 | PRM2 |
| mode 7 | 0 | 0 | 0 | 0 | 0 | F3 |
| mode 8 | 0 | 0 | 0 | 0 | 0 | F4 |
| mode 9 | 0 | 0 | 0 | 0 | 0 | DOA3 |
| mode 10 | 0 | 0 | 0 | 0 | 0 | PRM3 |

Annexe 14

$C_3$

Critère 1076

| | I1 | I2 | I3 | I4 | I5 | I6 | I7 | I8 | I9 | I10 | I11 | I12 | I13 | I14 | I15 | I16 | I17 | I18 | I19 | I20 | |
|---|---|---|---|---|---|---|---|---|---|---|---|---|---|---|---|---|---|---|---|---|---|
| mode 1 | 1 | 1 | 1 | 1 | 1 | 0 | 0 | 0 | 0 | 0 | 0 | 0 | 0 | 0 | 0 | 0 | 0 | 0 | 0 | 0 | DOA1 |
| mode 2 | 1 | 1 | 1 | 1 | 1 | 0 | 0 | 0 | 0 | 0 | 0 | 0 | 0 | 0 | 0 | 0 | 0 | 0 | 0 | 0 | PRM1 |
| mode 3 | 1 | 1 | 0 | 0 | 0 | 0 | 0 | 0 | 0 | 0 | 0 | 0 | 0 | 0 | 0 | 0 | 0 | 0 | 0 | 0 | F1 |
| mode 4 | 0 | 0 | 1 | 1 | 1 | 1 | 1 | 0 | 0 | 0 | 0 | 0 | 0 | 0 | 0 | 0 | 0 | 0 | 0 | 0 | F2 |
| mode 5 | 0 | 0 | 0 | 0 | 0 | 1 | 1 | 1 | 1 | 1 | 1 | 0 | 0 | 0 | 0 | 0 | 0 | 0 | 0 | 0 | DOA2 |
| mode 6 | 0 | 0 | 0 | 0 | 0 | 1 | 1 | 1 | 1 | 1 | 1 | 0 | 0 | 0 | 0 | 0 | 0 | 0 | 0 | 0 | PRM2 |
| mode 7 | 0 | 0 | 0 | 0 | 0 | 0 | 0 | 1 | 1 | 0 | 0 | 0 | 0 | 0 | 0 | 0 | 1 | 1 | 1 | 1 | F3 |
| mode 8 | 0 | 0 | 0 | 0 | 0 | 0 | 0 | 0 | 0 | 1 | 1 | 1 | 1 | 1 | 1 | 1 | 0 | 0 | 0 | 0 | F4 |
| mode 9 | 0 | 0 | 0 | 0 | 0 | 0 | 0 | 0 | 0 | 0 | 0 | 1 | 1 | 1 | 1 | 1 | 1 | 1 | 1 | 1 | DOA3 |
| mode 10 | 0 | 0 | 0 | 0 | 0 | 0 | 0 | 0 | 0 | 0 | 0 | 1 | 1 | 1 | 1 | 1 | 1 | 1 | 1 | 1 | PRM3 |

$C_2$

$C_1$

Annexe 15

|  | I1 | I2 | I3 | I4 | I5 | I6 | I7 | ... | IN |
|---|---|---|---|---|---|---|---|---|---|
| AOA 1 | 0 | 0 | 1 | 1 | 0 | 1 | 0 |  | 0 |
| AOA 2 | 1 | 1 | 0 | 0 | 1 | 0 | 0 |  | 0 |
| ..... |  |  |  |  |  |  |  |  |  |
| AOAm | 0 | 0 | 0 | 0 | 0 | 0 | 1 |  | 1 |
| F1 | 1 | 1 | 0 | 0 | 1 | 0 | 0 |  | 0 |
| F2 | 0 | 0 | 0 | 1 | 0 | 1 | 0 |  | 0 |
| ..... |  |  |  |  |  |  |  |  |  |
| Fn | 0 | 0 | 1 | 0 | 0 | 0 | 0 |  | 0 |
| IP1 | 0 | 0 | 0 | 0 | 0 | 0 | 1 |  | 1 |
| IP2 | 1 | 1 | 0 | 0 | 1 | 0 | 0 |  | 0 |
| ..... |  |  |  |  |  |  |  |  |  |
| Ipo | 0 | 0 | 0 | 1 | 0 | 1 | 0 |  | 0 |
| PRM1 | 0 | 0 | 1 | 1 | 0 |  | 1 |  | 0 |
| PRM2 | 0 | 0 | 0 | 0 | 0 | 0 | 1 |  | 1 |
| ..... |  |  |  |  |  |  |  |  |  |
| PRMp | 1 | 1 | 0 | 0 | 1 | 0 | 0 |  | 0 |

Annexe 16

Annexe 17

|  | I1 | I2 | I3 | I4 | I5 | I6 | I7 | ... | IN |
|---|---|---|---|---|---|---|---|---|---|
| I1 | 1 | 1 | 0 | 0 | 1 | 0 | 0 |  | 0 |
| I2 |  | 1 | 0 | 0 | 1 | 0 | 0 |  | 0 |
| I3 |  |  | 1 | 0,4 | 0 | 0,4 | 0 |  | 0 |
| I4 |  |  |  | 1 | 0 | 1 | 0 |  | 0 |
| I5 |  |  |  |  | 1 | 0 | 0 |  | 0 |
| I6 |  |  |  |  |  | 1 | 0 |  |  |
| I7 |  |  |  |  |  |  | 1 |  | 1 |
| ... |  |  |  |  |  |  |  |  |  |
| IN |  |  |  |  |  |  |  |  | 1 |

Annexe 18

|  | I3 | I4 | I6 | I1 | I2 | I5 | I7 | IN | ... |
|---|---|---|---|---|---|---|---|---|---|
| AOA 1 | 1 | 1 | 1 | 0 | 0 | 0 | 0 | 0 |  |
| AOA 2 | 0 | 0 | 0 | 1 | 1 | 1 | 0 | 0 |  |
| ..... |  |  |  |  |  |  |  |  |  |
| AOAm | 0 | 0 | 0 | 0 | 0 | 0 | 1 | 1 |  |

(suite)

|  | I3 | I4 | I6 | I1 | I2 | I5 | I7 | IN | ... |
|---|---|---|---|---|---|---|---|---|---|
| F1 | 0 |  | 0 | 1 | 1 | 1 | 0 | 0 |  |
| F2 | 0 |  | 1 | 0 | 0 | 0 | 0 | 0 |  |
| ...... |  |  |  |  |  |  |  |  |  |
| Fn | 1 |  | 0 | 0 | 0 | 0 | 0 | 0 |  |
| IP1 | 0 | 0 | 0 | 0 | 0 | 0 | 1 | 1 |  |
| IP2 | 0 | 0 | 0 | 1 | 1 | 1 | 0 | 0 |  |
| ..... |  |  |  |  |  |  |  |  |  |
| Ipo | 0 | 1 | 1 | 0 | 0 | 0 | 0 | 0 |  |
| PRM1 | 1 | 1 | 1 | 0 | 0 | 0 | 0 | 0 |  |
| PRM2 | 0 | 0 | 0 | 0 | 0 | 0 | 1 | 1 |  |
| ..... |  |  |  |  |  |  |  |  |  |
| PRMp | 0 | 0 | 0 | 1 | 1 | 1 | 0 | 0 |  |

Annexe 19

|  | AOA1 | AOA2 | AOAm | F1 | F2 | FN | IP1 | IP2 | IPO | PRM1 | PRM2 | PRMP |
|---|---|---|---|---|---|---|---|---|---|---|---|---|
| AOA1 | 1 | 0 | 0 | 0 | 0,66 | 0,33 | 0 | 0 | 0,66 | 1 | 0 | 0 |
| AOA2 |  | 1 | 0 | 1 | 0 | 0 | 0 | 1 | 0 | 0 | 0 | 1 |
| AOAm |  |  | 1 | 0 | 0 | 0 | 1 | 0 | 0 | 0 | 1 | 0 |
| F1 |  |  |  | 1 | 0 | 0 | 0 | 1 | 0 | 0 | 0 | 1 |
| F2 |  |  |  |  | 1 | 0 | 0 | 1 | 0 | 0,66 | 0 | 0 |
| Fn |  |  |  |  |  | 1 | 0 | 0 | 0 | 0,33 | 0 | 0 |
| IP1 |  |  |  |  |  |  | 1 | 0 | 0 | 0 | 1 | 0 |
| IP2 |  |  |  |  |  |  |  | 1 | 0 | 0 | 0 | 1 |
| Ipo |  |  |  |  |  |  |  |  | 1 | 1 | 0 | 0 |
| PRM1 |  |  |  |  |  |  |  |  |  | 1 | 0 | 0 |
| PRM2 |  |  |  |  |  |  |  |  |  |  | 1 | 0 |
| PRMp |  |  |  |  |  |  |  |  |  |  |  | 1 |

| | I3 | I4 | I6 | I1 | I2 | I5 | I7 | IN |
|---|---|---|---|---|---|---|---|---|
| AOA 1 | 1 | 1 | 1 | 0 | 0 | 0 | 0 | 0 |
| PRM1 | 1 | 1 | 1 | 0 | 0 | 0 | 0 | 0 |
| F2 | 0 | 1 | 1 | 0 | 0 | 0 | 0 | 0 |
| Ipo | 0 | 1 | 1 | 0 | 0 | 0 | 0 | 0 |
| Fn | 1 | 0 | 0 | 0 | 0 | 0 | 0 | 0 |
| AOA 2 | 0 | 0 | 0 | 1 | 1 | 1 | 0 | 0 |
| F1 | 0 | 0 | 0 | 1 | 1 | 1 | 0 | 0 |
| IP2 | 0 | 0 | 0 | 1 | 1 | 1 | 0 | 0 |
| PRMp | 0 | 0 | 0 | 1 | 1 | 1 | 0 | 0 |
| AOAm | 0 | 0 | 0 | 0 | 0 | 0 | 1 | 1 |
| IP1 | 0 | 0 | 0 | 0 | 0 | 0 | 1 | 1 |
| PRM2 | 0 | 0 | 0 | 0 | 0 | 0 | 1 | 1 |

Annexe 20

**Revendications**

**1.** Procédé de désentrelacement non supervisé de trains d'impulsions comprenant :

- une étape (Etp10) de constitution, pour chaque paramètre ou groupe de paramètres, représentatifs des trains d'impulsions, de N histogrammes, N étant un entier supérieur à 1, à une ou plusieurs dimensions définissant des groupes d'impulsions par paramètre ou groupe de paramètres;
- une étape (Etp20) d'extraction de modes, définissant des groupes d'impulsions par paramètre, à partir desdits histogrammes ;

**caractérisé en ce que** ledit procédé comprend en outre:

- une étape (Etp30) de constitution de groupes d'intérêt à partir desdits modes extraits ;
- une étape (Etp40) d'enrichissement de la description des impulsions à l'aide de labels traduisant leur appartenance à au moins un groupe d'intérêt ;
- une étape (Etp50) de classement croisé non supervisé des modes afin de réorganiser les impulsions enrichies par similarité.

**2.** Procédé selon la revendication précédente **caractérisé en ce que** l'étape (Etp20) comprend :

- une étape (Etp21) de seuillage des histogrammes ;
- une étape (Etp22) de décomposition des histogrammes en modes ;
- une étape (Etp23) de caractérisation des modes ;

**3.** Procédé selon une des revendications 1 à 2 **caractérisé en ce que** l'étape (Etp50) de classement des modes consiste à créer progressivement au moins une classe d'impulsions-modes homogènes, l'étape comprenant :

- à l'initialisation une recherche du mode ayant un maximum d'intérêt, ce mode formant la première classe, puis, pour chaque mode restant :
- une étape (Etp51) de recherche, parmi les modes restants, du mode ayant un cardinal d'intersection avec la classe en cours le plus grand ;
- une étape (Etp52) de recherche de la partition du mode trouvé, permettant de maximiser un critère de regroupement avec la ou les classes en cours ;
- une étape (Etp53) de fusion du mode avec la ou les classes en cours.

4. Procédé selon une des revendications 1 à 2 **caractérisé en ce que** l'étape (Etp50) de classement comprend :

- une étape (Etp56) de classification des impulsions en fonction de leurs liens de corrélation mutuelles ;
- une étape (Etp57) de classification des modes en fonction de leurs liens de corrélation mutuelles ;
- une étape (Etp58) de regroupement des modes et impulsions en classes.

## Patentansprüche

1. Verfahren zum unüberwachten Entschachteln von Impulsfolgen, das Folgendes beinhaltet:

- einen Schritt (Etp10) des Erstellens, für jede(n) Impulsfolgen repräsentierende(n) Parameter oder Parametergruppe, von N Histogrammen, wobei N eine ganze Zahl größer als 1 ist, mit einer oder mehreren Dimensionen, die Impulsgruppen nach Parameter oder Parametergruppe definieren;
- einen Schritt (Etp20) des Extrahierens von Modi, die Impulsgruppen nach Parameter definieren, auf der Basis der Histogramme;

**dadurch gekennzeichnet, dass** das Verfahren ferner Folgendes beinhaltet:

- einen Schritt (Etp30) des Bildens von Interessengruppen auf der Basis der extrahierten Modi;
- einen Schritt (Etp40) des Anreicherns der Beschreibung der Impulse mit Hilfe von Etiketten, die ihre Zugehörigkeit zu wenigstens einer Interessengruppe wiedergeben;
- einen Schritt (Etp50) des unüberwachten Kreuzklassifizierens der Modi, um die angereicherten Impulse nach Similarität umzuorganisieren.

2. Verfahren nach dem vorherigen Anspruch, **dadurch gekennzeichnet, dass** Schritt (Etp20) Folgendes beinhaltet:

- einen Schritt (Etp21) der Schwellenwertbildung an den Histogrammen;
- einen Schritt (Etp22) des Zerlegens der Histogramme in Modi;
- einen Schritt (Etp23) des Charakterisierens der Modi.

3. Verfahren nach einem der Ansprüche 1 bis 2, **dadurch gekennzeichnet, dass** der Schritt (Etp50) des Klassifizierens von Modi darin besteht, progressiv wenigstens eine Klasse von homogenen Impuls-Modi progressiv zu erzeugen, wobei der Schritt Folgendes beinhaltet:

- Initialisieren einer Suche des Modus mit einem maximalen Interesse, wobei dieser Modus die erste Klasse bildet, dann, für jeden verbleibenden Modus:
- einen Schritt (Etp51) des Suchens, unter den restlichen Modi, des Modus mit einem größten Kardinalitätsschnittpunkt mit der laufenden Klasse;
- einen Schritt (Etp52) des Suchens der Partition des gefundenen Modus, der es ermöglicht, ein Gruppierungskriterium mit der oder den laufenden Klasse(n) zu maximieren;
- einen Schritt (Etp53) des Fusionierens des Modus mit der oder den laufenden Klasse(n).

4. Verfahren nach einem der Ansprüche 1 bis 2, **dadurch gekennzeichnet, dass** der Klassifizierungsschritt (Etp50) Folgendes beinhaltet:

- einen Schritt (Etp56) des Klassifizierens der Impulse in Abhängigkeit von ihren gegenseitigen Korrelationsverbindungen;
- einen Schritt (Etp57) des Klassifizierens der Modi in Abhängigkeit von ihren gegenseitigen Korrelationsverbindungen;
- einen Schritt (Etp58) des Gruppierens der Modi und Impulse in Klassen.

**Claims**

1.  Method for non-supervised deinterleaving of pulse trains comprising:

    - a step (Etp10) of constituting, for each parameter or group of parameters, which are representative of the pulse trains, N histograms, N being a whole number greater than 1, having one or more dimensions which define groups of pulses per parameter or group of parameters;
    - a step (Etp20) of extracting modes which define groups of pulses per parameter, from the histograms;

    **characterised in that** the method further comprises:

    - a step (Etp30) of constituting groups of interest from the extracted modes;
    - a step (Etp40) of enriching the description of the pulses using labels which convey their association with at least one group of interest;
    - a step (Etp50) of non-supervised cross-classification of the modes in order to reorganise the pulses which are enriched by means of similarity.

2.  Method according to the preceding claim, **characterised in that** the step (Etp20) comprises:

    - a step (Etp21) of thresholding the histograms;
    - a step (Etp22) of decomposing the histograms into modes;
    - a step (Etp23) of characterisation of the modes.

3.  Method according to any one of claims 1 to 2, **characterised in that** the step (Etp50) of classification of the modes involves progressively creating at least one class of homogeneous pulse modes, the step comprising:

    - upon initialisation, searching for the mode which has the maximum level of interest, this mode forming the first class, then, for each remaining mode:
    - a step (Etp51) of searching, among the remaining modes, for the mode which has the greatest intersection cardinal with the current class;
    - a step (Etp52) of searching for the partition of the mode found, which enables a grouping criterion to be maximised with the current class(es);
    - a step (Etp53) of merging the mode with the current class(es).

4.  Method according to any one of claims 1 to 2, **characterised in that** the classification step (Etp50) comprises:

    - a step (Etp56) of classification of the pulses in accordance with their mutual correlation links;
    - a step (Etp57) of classification of the modes in accordance with their mutual correlation links;
    - a step (Etp58) of grouping the modes and pulses into classes.

**FIG.1**

**FIG.2**

**FIG.3**

Etp10

Constitution d'histogrammes

Etp20

Extraction des modes

Etp30

Constitution de groupes d'intérêt

Etp40

Enrichissement de la description des impulsions

Etp50

Classement non supervisée des modes

## FIG.4

Etp21

Seuillage des histogrammes

Etp22

Décomposition en modes

Etp23

Caractérisation des modes

## FIG.6

$C_x$      $C_x \cap C_y$      $C_y$

Choix 1     $C_x'$        $C_y'$

Choix 2     $C_x'$        $C_y'$

Choix 3     $C_x'$    $C_z'$    $C_y'$

Choix 4        $C_x'$

## FIG.8

FIG.5

EP 3 049 822 B1

FIG.7a

FIG.7b

EP 3 049 822 B1

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013157599 A